# EUROPEAN PATENT SPECIFICATION

(11) **EP 4 215 087 B1**
(45) Date of publication and mention of the grant of the patent: **31.01.2024**
(21) Application number: 23152148.5
(22) Date of filing: 18.01.2023
(51) Int. Cl.: A47J 19/02

(54) **HAND-OPERATED JUICER, DRIVE SCREW AND JUICING ASSEMBLY**
HANDBETÄTIGBARES ENTSAFTUNGSGERÄT, ANTRIEBSSPINDEL UND ENTSAFTUNGSANORDNUNG
CENTRIFUGEUSE MANUELLE, ENSEMBLE VIS D'ENTRAÎNEMENT ET JUS

(30) Priority: 18.01.2022 CN 202220131456 U; 24.10.2022 CN 202222804100 U
(43) Date of publication of application: 26.07.2023
(73) Proprietor: Ningbo Jinshun Houseware Co., Ltd, Ningbo, Zhejiang 315600 (CN)
(72) Inventor: JIN, Renhao, Ningbo, Zhejiang, 315600 (CN)
(74) Representative: Cabinet Chaillot

(56) References cited:
- CN-A- 110 393 424
- CN-U- 208 875 991
- US-A1- 2007 125 244

## Description

### TECHNICAL FIELD

The present invention relates to the technical field of juicers, and in particular to a hand-operated juicer, a drive screw and a juicing assembly.

### BACKGROUND ART

A juicer is a machine capable of rapidly squeezing fruits and vegetables into fruit and vegetable juice, and is mainly divided into two types: electric type and manual type according to different power.

An electric squeezing machine drives an internal screw by a motor and completes juicing through rolling by the internal screw rotating at a high speed. For example, the Chinese patent application "juicer" with the application number CN201710466647.7 (notification number CN107149380A) discloses such a juicer, including a shell, a juicing cup, a cup cover, an upper squeezing head, a lower squeezing head, a screw and a motor. The upper squeezing head is mounted in the cup cover; the top end of the screw extends into the juicing cup; the lower squeezing head is mounted at the top end of the screw; the juicing cup is mounted on the shell; the motor is mounted in the shell and moves up and down in the shell; a sleeve is arranged at the periphery of the screw; a nut is movably arranged in the sleeve, but the nut cannot rotate with the sleeve; the screw is in threaded fit with the nut; an upper spring is arranged above the nut, and a lower spring is arranged below the nut; and the upper spring and the lower spring are located in the sleeve, and the upper spring and the lower spring abut against the nut. The juicer is rapid and efficient, but the juice is high in cost and inconvenient to clean and it is necessary to peel before juicing, so the operation is time-consuming and laborious, and it is very time-consuming to clean after use at each time. To locate fruit on the lower squeezing head, an inserting rod extending upward is arranged at the top of the lower squeezing head. When the lower squeezing head moves upward to the top, the inserting rod may pierce the fruit to be in contact with an inner cavity surface of the upper squeezing head. At this time, if the upper squeezing head is directly opened, the inserting rod will scratch the inner cavity surface of the upper squeezing head, even influence the opening of the juicing cover, so it is generally necessary to retreat the juicing head to open the juicing cover. In particular, to firmly locate the fruit, the inserting rod will be generally set longer, and the situation that the inserting rod will scratch the inner cavity surface of the upper squeezing head will be more serious. In addition, in the juicer, if the drive screw drives the juicing head to move forward too far, the juicing head will burst the juicing cover, but if the juicing head moves forward too short, juicing will be incomplete.

The manual juicer performs juicing mainly through squeezing, and is mainly used to squeeze fruits and vegetables with more water content, such as oranges, tangerines, watermelon and tomatoes. For example, the Chinese patent application "Juicer" with the application number CN202010812108.6 (notification number CN111972959A) discloses such as juicer, including a base, a pressing rod, a transition connecting rod, a lower pressing pin shaft, an I-shaped frame, a pressing surface, a pressing cup and two supporting frames. The two supporting frames are respectively mounted on two sides of the base. The supporting frames are respectively hinged with the pressing rod and the I-shaped frame, the transition connecting rod is hinged with the I-shaped frame, the lower pressing pin shaft is hinged with the I-shaped frame, the pressing surface is in fit contact with the pressing cup, and the pressing cup is buckled in a pressing cup bracket. The pressing cup is matched with the shape of the pressing surface. During use, fruits and vegetables are placed between two squeezing heads, and a user pushes the pressing rod with hands and squeezes liquid in the fruits and vegetables by hand strength, so that the juice yield is low. Moreover, a current manual juicing and squeezing mechanism is very laborious to use, and cannot be used by those with less strength. In a vertical juicing path, juice will be in contact with peel when being full, and the peel is in contact with the outside world, so the peel is dirty, and the full juice will be polluted by the peel.

Therefore, existing juicers and juicing parts may be further improved.

Document CN110393424 discloses a manual extruding juice extractor, has machine box fixedly connected with juice receiving box, juice taking cover fixed at upper end of juice receiving box, and juice outlet pipe fixed at lower end of juice receiving box.

For another example, the Chinese patent application "Manual Squeezing Juicer" with the application number CN201910836379.2 (notification number CN110393424A) discloses such a juicer, including a machine box, a rotary handle, a juice-taking cover, a juice-pressing rod and a juice-receiving box. A feed hopper is arranged at the upper end of the machine box, a juicing cylinder communicating with the feed hopper is arranged in the machine box, the juice-taking cover communicating with the juicing cylinder is arranged on the outer side of the machine box, a pressing head in fit with the juice-taking cover is arranged in the juicing cylinder, a driven gear is arranged on one side, away from the juice-taking cover, of the juicing cylinder, the driven gear is in threaded fit with the juice-pressing rod (the juice-pressing rod is a threaded rod), the rotary handle is arranged on the outer side of the machine box, the rotary handle is connected with a rotating shaft, one end of the rotating shaft is connected to the rotary handle and the other end of the rotating shaft is rotatably connected to a side wall of the machine box, a driving gear in fit with the driven gear is sleeved on the rotating shaft, a juice-receiving box is arranged in the machine box, the upper end of the juice-receiving box communicates with the juice-taking cover through a juice-receiving pipe, and a juice outlet pipe is arranged at the lower end of the juice-receiving box.

The drive may be divided into two types according to materials. One is a metal screw made of a metal material, which has the advantages of high strength and high wear resistance and has the disadvantages of heavy weight and high cost. The other one is a plastic screw formed by plastic, which has the advantages of low cost and light weight and has the disadvantages of low strength and low wear resistance. However, the reasons for the defects of high noise and high vibration in the use process of the screw are as follows: the composite screw adopts a traditional spiral groove structure, the screw pitch is uniform, and the screw pitch of the spiral groove is large so as to be in fit with a thicker pushing clamping block; a large relative abutting force between the drive screw and the clamping block is required; in the actual use process of the juicer, when the screw is pushed to a limit position, the clamping block moves relatively to the tail end of the coil thread insert and slides to the adjacent previous turn of coil thread insert instantly from the tail end of the coil thread insert; due to the large screw pitch and the large abutting force, the sound the clamping block impacting the previous turn of coil thread insert is large; and large vibration to the juicer seriously affects the experience of users and the service life of the machine. Meanwhile, in order to squeeze the fruit as dry as possible to get more juice, a large relative abutting force between the drive screw and the clamping block is required; in the actual use process of the juicer, when the screw is pushed to the limit position, the clamping block moves relatively to the tail end of the drive thread and slides to the adjacent previous turn of thread instantly from the tail end of the drive thread; due to the large screw pitch and the large abutting force, the sound the clamping block impacting the previous turn of thread is large; and large vibration to the juicer seriously affects the experience of users and the service life of the machine.

Therefore, existing screws may be further improved.

### SUMMARY

The invention is defined by the appended claims.

The technical problem to be solved by the present invention is to provide a hand-operated juicer with reasonable structural layout, high juice yield and labor-saving operation, a drive screw, and a juicing assembly for avoiding damage to a juicing cover on the premise of ensuring complete juicing for the situation in the prior art, which are particularly suitable for juicing oranges, tangerines, lemons and other fruit.

To solve the above technical problem, the present invention adopts the following technical solution: a hand-operated juicer includes a shell; a juicing head, characterized in that an outer surface of the juicing head is an arc-shaped surface and is provided with a plurality of outer convex ribs; a juicing cover, connected to the shell, characterized in that the juicing cover is provided with an arc-shaped concave squeezing cavity, and the squeezing cavity is capable of accommodating the juicing head; a drive screw, capable of rotating around an axis of the drive screw and moving forward and backward, characterized in that a rear end of the drive screw is connected to an operator handle, and the juicing head is connected to a front end of the drive screw and is capable of rotating around the drive screw and moving forward and backward; and a juicing cup, arranged in the shell and used to store juice.

When the juice is normally used, the drive screw is arranged transversely, or arranged horizontally, the forward and backward movement is movement in a transverse direction, and fruits and vegetables are arranged between the juicing head and the juicing cup for squeezing. By adoption of the above technical solution, the present invention has the following technical effects: 1. The juicer is powered manually and has lower cost relative to the electric juicer; and during juicing, the driven screw is driven by the operator handle for drive, the drive screw moves forward while rotating under the threaded fit action so as to drive the juicing head to move gradually close to the juicing cover while rotating, the juicing process adopts rotary squeezing, and complete juicing and high juice yield are achieved. 2. The juicing path of the juicer is transverse; and compared with the vertical juicing path, the squeezed juice directly flows downward into the juicing cup without being polluted, a labor-saving lever is formed between the operator handle and the drive screw, and the juicing operation is labor-saving. 3. During juicing, oranges, tangerines and lemons are cut in half, the pulp end is hung on the inserting rod, the peel faces outward (faces the juicing cover), and the fruit is fixed without peeling the fruit, so the juicing operation is more convenient.

As a further improvement, the juicer further includes a clamping connection piece capable of sliding left and right, characterized in that the clamping connection piece is provided with a small hole part and a big hole part which communicate with each other, the drive scree passes through the small hole part, a hole wall of the small hole part is clamped into a thread groove of the drive screw to achieve threaded fit, and when the drive screw moves backward, the drive screw is capable of passing through the big hole part and a hole wall of the big hole part is unable to be clamped into the thread groove of the drive screw. According to the technical solution, the juicing head can rapidly retract and reset along with the drive screw for next juicing. During rapid retraction, a force is applied to the clamping connection piece, the clamping connection piece is driven to move along a direction (that is, a left-right direction) perpendicular to the axis of the drive screw, the drive screw can pass through the big hole part, the hole wall of the big hole part cannot be clamped into the thread groove of the drive screw, and there is no longer a threaded fit relation between the drive screw and the clamping connection piece, so that the drive screw can be directly pulled to drive the juicing head to return for next juicing; and during juicing, the force applied to the clamping connection force is stopped, the clamping connection piece resets, the drive screw passes through the small hole part, and the hole wall of the small hole part is clamped into the thread groove of the drive screw to achieve threaded fit, so that the drive screw can drive the juicing head to move forward while rotating. Furthermore, when the juicing head is at the most forward position, the fruit after juicing can be taken down more conveniently, and the to-be-juiced can be mounted on the juicing head more conveniently.

As a further improvement, several inner convex ribs extending from a middle part of the squeezing cavity to an edge are arranged on an inner wall of the squeezing cavity, and the inner convex ribs are distributed uniformly along the inner wall of the squeezing cavity. Usually, the inner convex ribs are distributed at the inner wall of the squeezing cavity radially, and the arrangement of the inner convex ribs can increase a frictional force between the squeezing cavity and the outer peel of the fruit to ensure that the peel will not rotate relative to the squeezing cavity as much as possible, so that the juicing head can rotate around the own axis better relative to the fruit, and a better juicing effect is achieved. A certain gap is present among a plurality of inner convex ribs arranged at intervals, thereby facilitating the arrangement of other structures on the juicing cover.

To further improve the juicing effect, the inner convex ribs are provided with clamping thorns, and a transition convex rib is arranged between two adjacent ones of the inner convex ribs.

By adoption of the technical solution, the clamping thorns can hook the peel better to further ensure that the peel will not rotate relative to the squeezing cavity; furthermore, the transition convex rib is generally shorter than each of the inner convex ribs, and the arrangement of the transition convex rib can enhance the strength of the juicing cover and also can further increase the frictional force between the squeezing cavity and the outer peel of the fruit.

As a further improvement, the juicing cover is hinged on the shell; when the inserting rod abuts against the inner wall of the squeezing cavity, a gap is still present between the inner convex ribs and the outer convex ribs; and when the squeezing cover is overturned and opened, an end part of the inserting rod passes through a sliding groove between two adjacent ones of the inner convex ribs and is capable of sliding out of the sliding groove.

By adoption of the technical solution, when the inserting rod abuts against the inner wall of the squeezing cavity, a gap is still between the outer convex ribs and the inner convex ribs. When the drive screw moves forward to the limit position, the drive screw drives the juicing head to rotate continuously, and at this time, the gap between the outer convex ribs and the inner convex ribs ensures no interference and no mutual abrasion between the outer convex ribs and the inner convex ribs, thereby ensuring continuous rotation. The sliding groove may be singly formed in the juicing cover. Certainly, the simplest solution is that the sliding groove is surrounded by two adjacent inner convex ribs, so it is unnecessary to dig out another sliding groove; and a lock catch for locking the juicing cover at the closed position is arranged between the juicing cover and the shell. The juicing cover is hinged on the shell, so that the juicing cover is more convenient to open and close. Combined with the lock catch structure, the juicing cover and the shell can be firmly fixed to ensure the formation of a complete and firm juicing space. In view of the transverse operation of the whole juicer, the inserting rod and the drive screw are arranged transversely, so the inserting rod requires a certain length, otherwise, the fruit cannot be hung. Therefore, another new problem arises, that is, when the juicing cover is overturned and opened, a longer inserting rod will always abut against the inner wall of the squeezing cavity to block the overturning of the juicing cover, and the arrangement of the sliding groove enables the end part of the inserting rod to pass through and slide out of the sliding groove, thereby ensuring that the inserting rod will not affect the overturning and opening of the juicing cover.

Preferably, an inner end of each of the inner convex ribs has a certain distance from a center point of the squeezing cavity, so that an accommodating cavity is surrounded by the inner ends of the inner convex ribs, and the accommodating cavity is used to accommodate the end part of the inserting rod.

By adoption of the above technical solution, the accommodating cavity can accommodate the end part of the inserting rod, so that the inserting rod can be made as long as possible. The longer the inserting rod is, the more convenient it is to firmly position the fruit on the juicing head. Meanwhile, the inserting rod is prevented from bursting the juicing cover in the juicing process. If the drive screw drives the juicing head to move forward too far, the juicing head will burst the juicing cover, but if the juicing head moves forward too short, juicing will be incomplete.

As an improvement, each of the outer convex ribs extends from the top of the juicing head to an edge of the arc-shaped surface, and a recessed part is arranged between one end, close to the inserting rod, of each of the outer convex ribs and the inserting rod.

By adoption of the above technical solution, it can better ensure that the outer convex ribs penetrate into the pulp to facilitate forward movement of the juicing head in the juicing process, and also can ensure that the fruit is fixed on the juicing head more firmly.

As an improvement, one end of the clamping connection piece is connected to a key on the shell, and the other end of the clamping connection piece is provided with a spring that keeps the clamping connection piece moving toward a direction of the key.

By adoption of the above technical solution, for the convenience to drive the clamping connection piece to move, one end of the clamping connection piece is connected to a key on the shell, and the other end of the clamping connection piece is provided with a spring that keeps the clamping connection piece moving toward a direction of the key. Due to the arrangement of the spring, the clamping connection piece automatically resets after an external force disappears, so that the drive screw and the clamping connection piece form a threaded fit relation.

As a further improvement, a shaft sleeve is fixed in the shell, the drive screw penetrates into the shaft sleeve, the shaft sleeve supports the drive screw to ensure that the shaft sleeve is not easy to move and ensure more stable drive, and the mounting box provides appropriate mounting positions for the key, the clamping connection piece and the spring.

As a further improvement, a mounting box is fixed in the shell, the key, the clamping connection piece and the spring are arranged in the mounting box, the shaft sleeve passes through the mounting box, and the shaft sleeve is provided with a notch for the small hole part of the clamping connection piece to enter therethrough. The small hole part is in drive connection with an external thread section of the drive screw in the shaft sleeve.

Preferably, the small hole part is an arc-shaped clamping groove, the big hole part is a rectangular hole, and the arc-shaped clamping groove is located in the side wall of the rectangular hole. The arc-shaped clamping groove can better from a threaded drive fit relation with the thread groove, and the space of the rectangular hole is larger, when the drive screw is located in the rectangular hole, the resistance of the drive screw is smaller, and the drive screw retracts more easily.

For the convenience to take juice, the juicing cup is inserted into a lower part of the shell, and the lower part of the shell is provided with a cup inlet for the juicing cup to move in and out of the accommodating cavity.

Preferably, a lower part of the squeezing cavity is provided with an inclined guide surface for downward guiding juice to the juicing cup, and the arrangement of the inclined guide surface can better guide the juice into the juicing cup.

Preferably, a lock catch for locking the juicing cover at a closed position is arranged between the juicing cover and the shell. When the lock catch is disassembled, the juicing cover can turn over through a connecting shaft arranged at the lower end of the juicing cover so as to clean residues of fruits and vegetables in the juicing cover.

As a further improvement, the drive screw includes: a screw body, characterized in that an outer wall of the screw body is provided with an external thread section formed by several thread grooves, a coil thread insert, rotatably clamped in the thread grooves and exposed out of the thread grooves to form a drive thread; and a limiting joint, formed at a front end of the screw body and limiting and restraining the coil thread insert. By adoption of the above technical solution, the drive screw is provided with the coil thread insert rotatably clamped in the thread grooves of the external thread section, and a depth of each of the thread grooves is less than a thickness of the coil thread insert, so that an outer surface of the coil thread insert rotatably clamped in the thread grooves is exposed out of the thread grooves to form the drive thread. The drive thread is made of metal, so the strength and wear resistance of the drive thread are enhanced, the drive tread is not easy to wear after long-term use and is not easy to slip in the drive process, thereby ensuring stable drive of the drive screw. A groove width of each of the thread grooves is matched with a width of the coil thread insert, thereby avoiding waggling of the coil thread insert relative to the thread grooves and making the drive thread more stable.

As an improvement, the juicing head further includes an elastic part arranged in the juicing head, and the elastic part enables the outer surface of the juicing head to retract to a rear side when a squeezing force from a front side is greater than an elastic force of the elastic part. By adoption of the above technical solution, in a case of excessively short distance, excessively small gap and excessively large mutual action force between the juicing head and the corresponding juicing cover during work, the inner wall of the squeezing cavity may retract toward the front side when being squeezed from the rear side, thereby preventing the juicing head from further squeezing in the direction of the juicing cover to avoid the bursting of the juicing cover and the increase of the squeezing force, ensuring the service life of the juicer, and making an operator feel simple and labor-saving operation no matter in the previous stage or the later stage of juicing. The elastic part may be numerous substances and components that can be deformed, such as a spring, an elastic sheet, a torsional spring, a rubber pad, an air compression spring, a hydraulic piston and foam.

As a further improvement, when the inserting rod does not hang fruit, the juicing cover is closed and the drive screw drives the juicing head to move forward to a limit position, the inserting rod abuts against an inner wall of the squeezing cavity so as to block the juicing head, and the juicing head is rotatable relative to the juicing cover and the elastic part is deformed to make the insert rod apply a thrust to the inner wall of the squeezing cavity. By adoption of the above technical solution, the elastic part may act on the juicing head and the drive screw at the same time and may be deformed, so that when the juicing head stops moving forward due to the large resistance of peel and pulp, the drive screw may move forward continuously and transfer a forward thrust to the juicing head step by step through the deformed elastic part to increase the forward squeezing force of the juicing head; the elastic part may directly act on the juicing head and the drive screw and generate an action force to the juicing head and the drive screw, or may generate an action force to the juicing head and the drive screw indirectly through other parts and structures; and the drive screw moves forward to the limit position which means a position where the drive screw moves to the most front end and cannot continue to move forward, and at this position, the drive screw cannot obtain the action force of the clamping connection piece that is in threaded fit with the drive screw so as not to move forward any more.

In the prior art, the drive screw made of plastic has the defect of low drive thread strength, and the metal drive screw made of metal has the advantages of high strength and high wear resistance and the disadvantages of heavy weight and high cost. Furthermore, the metal drive screws have the defects of high noise and large vibration during use in the juicer due to that: the drive screw adopts a traditional coil thread insert structure, and the screw pitch of the coil thread insert is large in order to be in fit with a thicker pushing clamping block; meanwhile, for the convenience to squeeze the fruit as dry as possible to obtain more juice, a large relative abutting force between the drive screw and the clamping block is required; in the actual use process of the juicer, when the screw is pushed to a limit position, the clamping block moves relatively to the tail end of the coil thread insert and slides to the adjacent previous turn of coil thread insert instantly from the tail end of the coil thread insert; due to the large screw pitch and the large abutting force, the sound the clamping block impacting the previous turn of coil thread insert is large; and large vibration to the juicer seriously affects the experience of users and the service life of the machine. For the existing technical problems, the present invention further provides a drive screw with a reasonable structure, high wear resistance of a threaded part of the screw, light overall weight, high crack resistance and low cost.

The present invention further discloses a drive screw, including a screw body, characterized in that an outer wall of the screw body is provided with an external thread section formed by several thread grooves; a coil thread insert, partially rotatably clamped in the thread grooves on the outer thread section, characterized in that a groove width of each of the thread grooves is matched with a width of the coil thread insert, and a depth (H) of each of the thread grooves is less than a thickness of the coil thread insert, so that the coil thread insert is exposed out of the thread grooves to form a drive thread.

By adoption of the above technical solution, the coil thread insert rotatably clamped in the thread grooves of the external thread section is arranged on the screw body, and a depth of each of the thread grooves is less than a thickness of the coil thread insert, so that an outer surface of the coil thread insert rotatably clamped in the thread grooves is exposed out of the thread grooves to form the drive thread. The coil thread insert is made of metal, so the strength and wear resistance of the drive thread are enhanced, the drive tread is not easy to wear after long-term use and is not easy to slip in the drive process, thereby ensuring stable drive of the drive screw. A groove width of each of the thread grooves is matched with a width of the coil thread insert, thereby avoiding waggling of the coil thread insert relative to the thread grooves and making the drive thread more stable.

The cross section of the coil thread insert is rectangular, and the cross section of the thread groove is U-shaped. The shapes of the coil thread insert and the thread grooves enable the metal coil thread insert to be in planar contact with the thread grooves, so that the metal coil thread insert is located in the thread grooves more stably, the cross section of the drive thread is U-shaped, and the drive effect is more excellent.

As an improvement, the coil thread insert includes a compression section located at a tail part of the coil thread insert, the compression section extends to a tail end of the coil thread insert, the compression section is rotatably arranged on the screw body outside the thread grooves, and the compression section is capable of being compressed along an axial direction of the screw body under the condition of being stressed, such that the tail end of the coil thread insert is compressed toward the adjacent previous turn of the coil thread insert.

By adoption of the above technical solution, the coil thread insert has a compression section at the tail part. During use of the juicer and under the condition that the compression section of the coil thread insert is subjected to the axial pressure of the juicing cover, the compression section is compressed and deformed, and the tail end of the coil thread insert moves close to the adjacent previous turn of coil thread insert, so that the distance between the tail end of the last turn of coil thread insert and the adjacent previous turn of coil thread insert is gradually reduced. When a clamping connection block is driven and pushed to the tail end of the coil thread insert, the distance is the shortest. At this time, the clamping connection bock instantly slides from the tail end of the coil thread insert to the adjacent previous turn of coil thread insert. Therefore, the distance is the shortest, and the noise of the clamping connection block impacting the adjacent previous coil thread insert is the lowest, so that the noise of the juicer during operation and damage to the juicer by the vibration are greatly reduced. A width of the tail end of the coil thread insert is less than a width of the adjacent previous turn of coil thread insert, and the compression section is relatively thinner and is prone to compression and deformation.

As an improvement, an outer end face of the tail end of the coil thread insert is an inclined surface inclining toward the adjacent previous turn of the coil thread insert. By adoption of the above technical solution, an outer end face of the tail end of the coil thread insert is set as an inclined surface, so that the compression section of the outermost turn of the coil thread insert is prone to deformation, the clamping connection block slides from the outer end face of the tail end of the coil thread insert to the adjacent previous turn of coil thread insert, and the noise is reduced better.

As an improvement, the screw body is axially provided with a metal blocking sheet for blocking the tail end of the coil thread insert from screwing in along a circumferential direction. By adoption of the above technical solution, the metal blocking sheet has higher wear resistance. Under the blockage of the metal blocking sheet, when the compression section of the coil thread insert performs axial deformation and movement, the tail end of the last turn of coil rubs against the metal blocking sheet instead of the drive screw, and the body is not prone to wear. The metal blocking sheet may be made of metal with high hardness and strength. The metal blocking sheet can enhance the strength when the drive screw behind the coil thread insert bears the rotary stress during idling, thereby preventing breakage of the drive screw at the polished rod at the rear end of the thread groove caused by the excessively large stress when the drive screw screws in and out.

As an improvement, a width of a coil of the last turn of the coil thread insert is less than a width of a coil of the previous turn of the coil thread insert, and a width of a coil of the last turn of the coil thread insert gradually decreases towards a width of the tail end part. By adoption of the above technical solution, the coil width of the compression section of the outermost turn of coil thread insert is gradually reduced to the tail end. When the outermost turn of compression section is deformed, the compression section is not prone to breakage and the tail end part is prone to deformation, and the outermost turn may be gradually deformed to the previous turn according to the strength.

As an improvement, a surrounding angle of the compression section on the screw body is between 180 degrees and 360 degrees.

By adoption of the above technical solution, the surrounding angle of the compression section on the screw body is between 180 degrees and 360 degrees, so that the deformation capacity of the compression section is the most suitable. If the circumferential radian of the compression section is excessively large, the compression section is prone to deformation when being subjected to an axial pressure and is excessively soft, has insufficient bearing strength and cannot bear a large axial force, the force transferred by the drive screw will be reduced, the design requirement may not be met, and it is difficult to squeeze the pulp juice dry. If the radian is excessively small, the coil thread insert of the compression section is not prone to deformation when being subjected to the axial pressure, is excessively hard, has a small deformation quantity, and is not enough to make the tail end of the coil thread insert close to the adjacent previous turn of coil thread insert as much as possible. After numerous tests, modifications and verifications, it is determined that the radian of the compression section when the surrounding angle is between 180 degrees and 360 degrees is the optimal radian.

As a further improvement, the screw body corresponding to the compression section at the tail end of the coil thread insert is axially provided with an inserting groove, the metal blocking sheet comprises an inserting part and a protruded part, the inserting part is inserted into the inserting groove, the tail end of the coil thread insert is capable of abutting against one side of the protruded part, and the protruded part is capable of blocking the tail end of the coil thread insert from screwing in along the circumferential direction. By adoption of the above technical solution, under the blockage of the metal blocking sheet, when the compression section of the coil thread insert performs axial deformation and movement, the tail end of the last turn of coil rubs against the metal blocking sheet instead of the drive screw, and the drive screw is not prone to wear.

As an improvement, the drive screw further includes a polished rod, characterized in that one end of the polished rod body includes an abutting end connected to the screw body, and the abutting end abuts against the other side of the protruded part; a metal mandrel, arranged in the screw body and the polished rod body, characterized in that the metal mandrel, the screw body and the polished rod body integrally form the drive screw through injection molding; and a limiting joint, arranged at an end part of the screw body and limiting and restraining a head end of the coil thread insert. By adoption of the above technical solution, the cross section of the metal mandrel is polygonal; the metal mandrel, serving as an insert, and the outer layer of plastic rod are integrally formed through injection molding or/and are in inserting connection with each other; the main bodies of the polished rod body and the screw body are plastic rods. Compared with the pure metal screw, the polished rod body and the screw body have the advantages of light weight, convenient processing and low cost; in order to make up the defect of low drive thread strength of the plastic screw, the metal mandrel and the plastic polished body and screw body are combined firmly, and the structure makes the metal mandrel, the polished rod body and the screw body difficult to rotate relatively under the action of a twisting force. The polished rod body and the screw body are tightly combined through detachable and fixed inserting connection, and are not easy to separate even under the action of a large twisting force. The limiting joint is restrained in a connecting head in a concave cavity, and the connecting head is sleeved on a bolt fixing column through an elastic part.

The juicing head of the juicer in the prior art is driven by the drive screw to move to the juicing cover. If the juicing head moves forward too far, the juicing head will burst the juicing cover, but if the juicing head moves forward too short, juicing will be incomplete. To solve the above defect and on the premise of ensuring complete juicing and avoiding damage to the juicing cover, the juicer is suitable for juicing fruits such as oranges and lemons.

The present invention further discloses a juicing assembly for a juicer, including a juicing head, and a drive screw connected to the juicing head. An outer surface of the juicing head is an arc-shaped surface and is provided with a plurality of outer convex ribs. The juicing assembly further includes an elastic part, arranged in the juicing head or on the drive screw, characterized in that the elastic part enables the outer surface of the juicing head to retract to the other side when a squeezing force from one side is greater than an elastic force of the elastic part.

By adoption of the above technical solution, the juicing head and the drive screw are in elastic connection with each other, in a case of excessively short distance, excessively small gap and excessively large mutual action force between the juicing head and the corresponding juicing cover during work, the juicing head will overcome the elastic force of the elastic part to move backward and retract relative to the drive screw, thereby preventing the juicing head from further squeezing in the direction of the juicing cover to avoid the bursting of the juicing cover and the increase of the squeezing force, ensuring the service life of the juicer, and making an operator feel simple and labor-saving operation no matter in the previous stage or the later stage of juicing. It should be noted that the elastic part may be numerous substances and components that can be deformed, such as a spring, an elastic sheet, a torsional spring, a rubber pad, an air compression spring, a hydraulic piston and foam.

Preferably, the juicing head is internally provided with an inner cavity, a connecting head is restrained in the concave cavity, the connecting head and the concave cavity are in key groove fit and are capable of sliding forward and backward relatively, a front end of the drive screw is inserted in the connecting head, and the elastic part acts on the connecting head. By adoption of the above technical solution, as a first specific retracting structure of the juicing head, an outer shell and an inner shell that can slide relatively are arranged on the juicing head, the outer convex ribs are arranged on the outer surface of the outer shell, and the elastic part is arranged between the outer shell and the inner shell. As a second specific retracting structure of the juicing head, a concave cavity is formed in the juicing head, the elastic part is arranged in the concave cavity and acts on the drive screw, a connecting head is restrained in the concave cavity, the connecting head and the concave cavity are in key groove fit and are capable of sliding forward and backward relatively, the front end of the drive screw is in inserting connection with the connecting head, the elastic part acts on the connecting head, and this structure is convenient to connect the juicing head and the drive screw through the elastic part.

Preferably, the elastic part is located between the juicing head and the drive screw, one end of the elastic part acts on the juicing head, and the other end of the elastic part acts on the drive screw.

Preferably, a bolt fixing column is arranged in the concave cavity, and the elastic part is sleeved on the bolt fixing column and acts on the drive screw.

By adoption of the above technical solution, the elastic part is sleeved on the bolt fixing column, and the path of the elastic part can be stabilized for compression and springback.

Preferably, a locking piece is arranged in the concave cavity, and the locking piece is connected to the bolt fixing column through a bolt to prevent the connecting head from popping out toward a direction of the drive screw.

Preferably, an inserting rod for hanging fruit is arranged at the transverse top of the outer surface of the juicing head.

By adoption of the above technical solution, when the juicing cover is closed and fruit is not hung on the inserting rod, the drive screw drives the juicing head to move forward; when the juicing head moves forward to the inserting rod and just abuts against the inner wall of the squeezing cavity, the forward movement of the juicing head is blocked; at this time, due to the deformation of the elastic part, the drive screw also can continue to move forward to a limit position, but the juicing head is blocked and still cannot move forward, and the inserting rod plays a role in limiting the juicing head, thereby ensuring that the juicing head and the juicing cover can maintain a necessary distance; and this situation prevents the juicing head and the juicing cover from being excessively close to each other during idling of the juicer and in the juicing process, in particular, preventing the outer convex rib of the juicing head and the inner convex rib of the juicing cover from being excessively close to each other so as to avoid mutual wear and damage to the machine.

Further preferably, a reinforcing rib is fixedly connected between an outer wall of the concave cavity and an inner concave surface of the juicing head.

By adoption of the above technical solution, a plurality of reinforcing ribs are arranged between the concave cavity and the inner concave surface of the juicing head at intervals, the concave cavity is formed in the middle of the inner concave surface, and the structures of the reinforcing ribs enable the inner wall of the juicing head to form a larger internal space; and compared with the solid juicing head, more materials are saved, the cost is educed, and the strength of the juicing head is ensured.

Further preferably, each of the outer convex ribs extends from the top of the juicing head to an edge of the arc-shaped surface, and a recessed part is arranged between one end, close to the inserting rod, of each of the outer convex ribs and the inserting rod.

By adoption of the above technical solution, when the inserting rod just abuts against the inner wall of the squeezing cavity, the drive screw continues to move forward, which will gradually increase the action force to the elastic part; the elastic part is deformed to transfer the born action force of the drive screw to the juicing head and gradually increase a forward thrust to the juicing head, and the inserting rod applies the same thrust to the inner wall of the squeezing cavity; and when the drive screw moves forward to the limit position, the forward thrust that is applied to the juicing head by the drive screw through the elastic part (the elastic part is compressed to a great degree) is the largest, correspondingly, the thrust that is applied to the inner wall of the squeezing cavity by the inserting rod is the largest. By the structure under no load and idling and the mutual action and stress relation, when the juicer works normally for juicing, at the last stage of juicing the fruit, the juicing head can have a sufficient squeezing force on the remaining pulp and peel in the squeezing cavity so as to overcome the large resistance of the peel and the pulp, thereby achieving more complete and cleaner juicing. If there is no such structure and stress relation, at the last stage of juicing and under the condition that the pulp and the peel are squeezed to a very limited space, an opposite action force (that is, resistance) generated by the pulp and the peel is large to hinder the squeezing work of the juicing head, indicating that the juicing head has an insufficient squeezing force and the juice cannot be fully squeezed, resulting in great waste. From the overall point of the technical solution, a necessary distance between the juicing head and the juicing cover can be ensured, damage to the machine can be avoided, and a large squeezing force is preset for the juicing head when the drive screw moves forward to the limit position, thereby achieving more complete juicing.

In the prior art, the juicing head moves rotatably from the rear end to the juicing cover and the front end; the fruit is juiced when the juicing head moves to the juicing cover; sometimes the juicing head moves forward too short, and the peel will rotate relative to the squeezing cavity, resulting in incomplete juicing; and sometimes the juicing head moves forward too long, and the juicing cover cannot be opened after the inserting rod abuts against the inner cavity of the juicing cover.

For the defect of the juicing cover, the present invention further discloses a juicing assembly for a juicer, including a juicing head and a juicing cover, characterized in that the juicing cover is provided with an arc-shaped concave squeezing cavity, the squeezing cavity is capable of accommodating the squeezing head, and an inner wall of the squeezing cavity is provided with several inner convex ribs extending from a middle part of the squeezing cavity to the edge.

By adoption of the above technical solution, the juicing cover in the juicing assembly is provided with an arc-shaped concave squeezing cavity for accommodating the juicing head, and an inner convex rib is arranged on the inner wall of the squeezing cavity. Usually, the inner convex ribs are distributed at the inner wall of the squeezing cavity radially, and the arrangement of the inner convex ribs can increase a frictional force between the squeezing cavity and the outer peel of the fruit to ensure that the peel will not rotate relative to the squeezing cavity as much as possible, so that the juicing head can rotate around the own axis better relative to the fruit, and a better juicing effect is achieved. A certain gap is present among a plurality of inner convex ribs arranged at intervals, thereby facilitating the arrangement of other structures on the juicing cover.

Preferably, the inner convex ribs are uniformly distributed along the inner wall of the squeezing cavity, and a transition convex rib is arranged between two adjacent ones of the inner convex ribs. By adoption of the technical solution, the transition convex rib is generally shorter than each of the inner convex ribs, and the arrangement of the transition convex rib can enhance the strength of the juicing cover, can prevent the peel from sliding from two adjacent ones of the inner convex ribs to the guide surface, and also can further increase the frictional force between the squeezing cavity and the outer peel of the fruit.

Further preferably, the transition convex rib and the inner convex ribs are provided with clamping thorns. By adoption of the above technical solution, the clamping thorns can better hook the peel, thereby further ensuring that the peel will not rotate relative to the squeezing cavity.

Further preferably, an inserting rod for hanging fruits is arranged between the juicing head and the juicing cover, and an outer surface of the juicing head is an arc-shaped surface and is provided with a plurality of convex ribs. When the inserting rod abuts against the inner wall of the squeezing cavity, a gap is still present between the inner convex ribs and the outer convex ribs; and when the squeezing cover is overturned and opened, an end part of the inserting rod passes through a sliding groove between two adjacent ones of the inner convex ribs and is capable of sliding out of the sliding groove.

By adoption of the above technical solution, the sliding groove may be singly formed in the juicing cover. Certainly, the simplest solution is that the sliding groove is surrounded by two adjacent inner convex ribs, so it is unnecessary to dig out another sliding groove; and a lock catch for locking the juicing cover at the closed position is arranged between the juicing cover and the shell. The juicing cover is hinged on the shell, so that the juicing cover is more convenient to open and close. Combined with the lock catch structure, the juicing cover and the shell can be firmly fixed to ensure the formation of a complete and firm juicing space. In view of the transverse operation of the whole juicer, the inserting rod and the drive screw are arranged transversely, so the inserting rod requires a certain length, otherwise, the fruit cannot be hung. Therefore, another new problem arises, that is, when the juicing cover is overturned and opened, a longer inserting rod will always abut against the inner wall of the squeezing cavity to block the overturning of the juicing cover, and the arrangement of the sliding groove enables the end part of the inserting rod to pass through and slide out of the sliding groove, thereby ensuring that the inserting rod will not affect the overturning and opening of the juicing cover.

As a further improvement, an inner end of each of the inner convex ribs has a certain distance from a center point of the squeezing cavity, so that an accommodating cavity is surrounded by the inner ends of the inner convex ribs, and the accommodating cavity is capable of accommodating the end part of the inserting rod.

By adoption of the above technical solution, the accommodating cavity can accommodate the end part of the inserting rod, so that the inserting rod can be made as long as possible. After the inserting rod is lengthened, the pulp can be jacked and squeezed repeatedly by the elastic part, so that juicing is more complete. The longer the inserting rod is, the more convenient it is to firmly position the fruit on the juicing head. Meanwhile, the inserting rod is prevented from bursting the juicing cover in the juicing process, and collision and contact between the outer convex ribs and the inner convex ribs when the juicing head rotates are avoided. The juicing head and the drive screw are in elastic connection with each other. In a case of excessively short distance, excessively small gap and excessively large mutual action force between the juicing head and the corresponding juicing cover during work, the juicing head will overcome the elastic force of the elastic part to move backward and retract relative to the push rod, thereby preventing the squeezing head from further squeezing in the direction of the juicing cover so as to avoid the bursting of the juicing over and the increase of the squeezing force, thereby ensuring the service life of the juicer. The elastic force is provided to the connecting head through a plurality of elastic parts (that is, springs), so that the elastic force of the juicing head is more balanced, clamping stagnation of the connecting head in the moving process is avoided, and smooth movement of the connecting head is ensured. One end of the elastic part acts on a lug, and a bottom surface of the connecting head and a bottom surface of the lug have a distance. Compared with the fact that the spring is arranged between the concave cavity and the bottom surface of the connecting head, this structure may set the spring longer, the spring can be compressed greatly, a more appropriate elastic force can be provided to the juicing head, and damage to the juicing cover by the juicing head can be avoided while a good juicing rate is ensured.

### BRIEF DESCRIPTION OF THE DRAWINGS

The drawings of the specification that constitutes a part of the present application are used to provide a further understanding of the present invention. The exemplary embodiments of the present invention and the description thereof are used to explain the present invention, and do not constitute an improper limitation of the present invention. In the drawings:
FIG. 1 is a schematic diagram of a three-dimensional structure of a hand-operated juicer embodiment when a juicing cover is opened;
FIG. 2 is a schematic diagram of a three-dimensional structure of a hand-operated juicer embodiment when a juicing cover is closed;
FIG. 3 is a sectional view of the hand-operated juicer embodiment in FIG. 2 along a direction A-A;
FIG. 4 is a schematic diagram of a three-dimensional structure when a drive screw and a juicing head of a hand-operated juicer do not move forward;
FIG. 5 is a sectional view along a height direction of a middle part of the hand-operated juicer in FIG. 4;
FIG. 6 is a sectional view of the hand-operated juicer embodiment in FIG. 2 along a direction B-B;
FIG. 7 is a schematic diagram of a hole wall of a small hole part of a clamping connection piece in a hand-operated juicer embodiment clamped into a thread groove of a drive screw;
FIG. 8 is a schematic diagram of a drive screw in a hand-operated juicer embodiment located in a big hole part of a clamping connection piece;
FIG. 9 is a schematic diagram of a three-dimensional structure of a squeezing cavity of a hand-operated juicer;
FIG. 10 is a schematic exploded view of connection between a drive screw and a juicing head;
FIG. 11 is a sectional view of a juicing head embodiment;
FIG. 12 is an exploded structural schematic diagram of each part of a drive screw;
FIG. 13 is a structural schematic diagram of a screw body of a drive screw;
FIG. 14 is a schematic diagram of a mounting structure of a drive screw and an enlarged view of a compression section;
FIG. 15 is a sectional view of a drive screw embodiment along a length direction and an enlarged view of a compression section;
FIG. 16 is a three-dimensional schematic diagram of a shaft sleeve in a hand-operated juicer embodiment;
FIG. 17 is a schematic diagram of a connection structure of a shaft sleeve and a clamping connection piece in a hand-operated juicer embodiment;
FIG. 18 is a structural schematic diagram of a clamping connection piece in a hand-operated juicer embodiment; and
FIG. 19 is another setting mode of an elastic part according to an embodiment of the present invention.

### Description of reference numerals:

1- shell; 11-cup inlet; 12-front opening; 13-shaft sleeve; 14-mounting box; 131-notch;
2- juicing head; 21-outer convex rib; 22-inserting rod; 23-recessed part; 24-connecting head; 241-lug part; 25-concave cavity; 26-locking piece; 27-bolt fixing column; 28-reinforcing rib;
3- juicing cover; 31-squeezing cavity; 32-inner convex rib; 321-sliding groove; 33-clamping thorn; 34-transition convex rib; 35-lock catch; 36-accommodating cavity; 37-guide surface;
4- juicing cup;
5- drive screw; 51-screw body; 511-thread groove; 512-inserting groove; 513-limiting plug; 52-polished rod body; 521-abutting end; 522-rear end plug; 53-coil thread insert; 531-compression section; 5311-insert tail end; 54-metal blocking sheet; 541-protruded part; 542-inserting part; 55-metal mandrel; S-drive thread; M-outer end face;
6- operator handle;
7- elastic part;
8- clamping connection piece; 81-small hole part; 82-big hole part;
9- key; 10-spring.

### DETAILED DESCRIPTION

The present invention is described in detail below with reference to the accompanying drawings and embodiments. Each example is provided to explain the present invention

In the description of the present invention, orientation or position relationships indicated by terms "longitudinal", "transverse", "upper", "lower", "front", "rear", "left", "right", "vertical", "horizontal", "top", "bottom" and the like are orientation or position relationships shown in the drawings, and these terms are merely for facilitating description of the present invention, but not for requiring that the present invention must be constructed and operated in a specific orientation, and thus, these terms cannot be understood as a limitation to the present invention. As used in the present invention, the terms "connected", "connection" and "set" should be understood in a broad sense, for example, they may be fixed connection or detachable connection, they may be direct connection or indirect connection through an intermediate part; or they may be wired connection and wireless connection, or may be connection through a wireless communication signal. For those of ordinary skill in the field, the specific meanings of the terms may be understood according to the specific conditions.

The accompanying drawings show one or a plurality of examples of the present invention. The detailed description uses reference numerals and letters to refer to the features in the accompanying drawings. Similar numeral references in the drawings and description have been used to refer to the similar parts in the present invention. As used herein, the terms "first", "second" and "third" are used interchangeably to distinguish one component from another component, and are not intended to indicate the position or importance of individual components.

### Embodiment 1

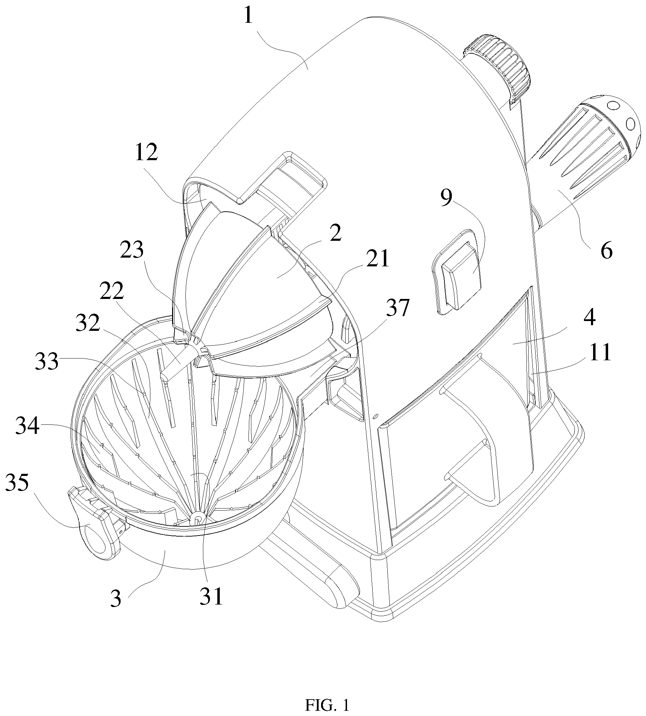

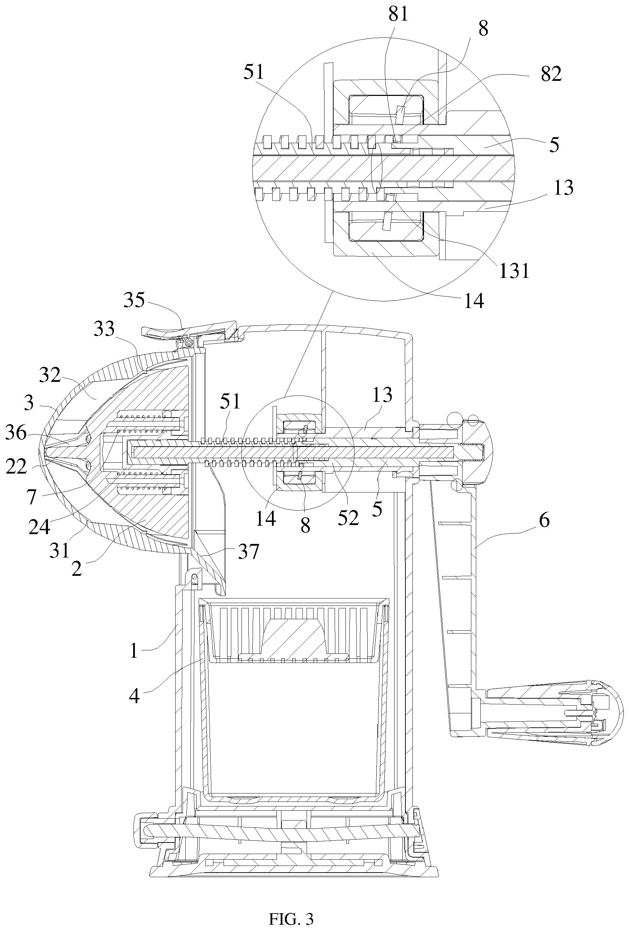

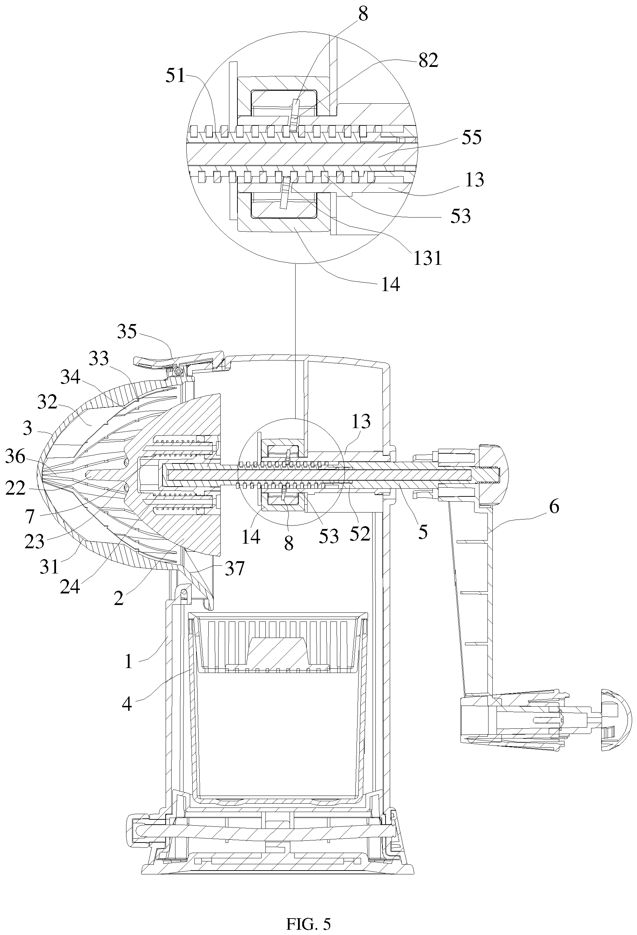

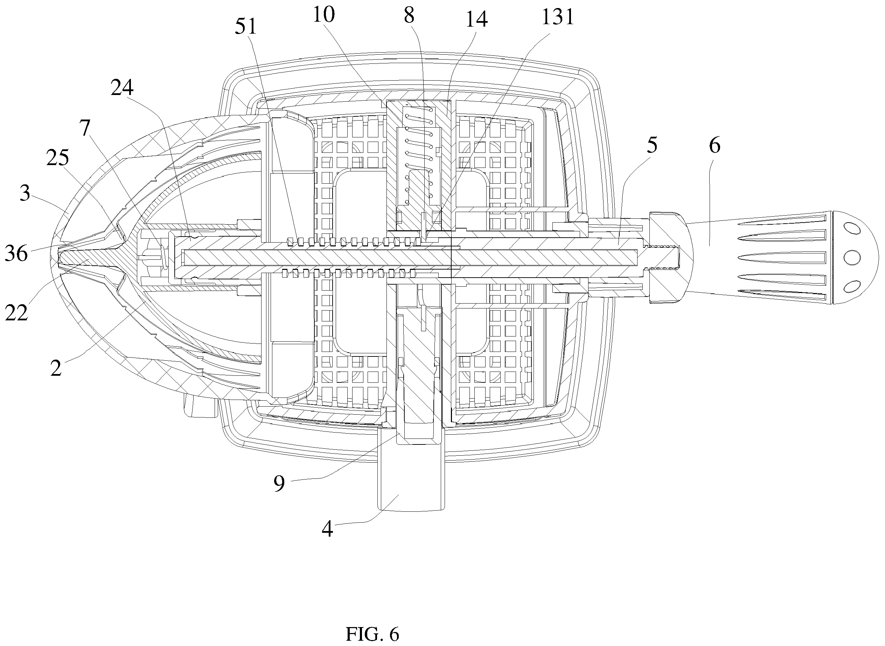

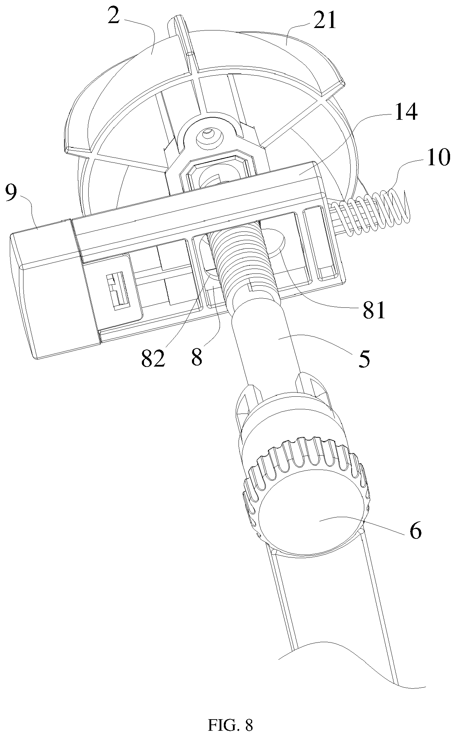

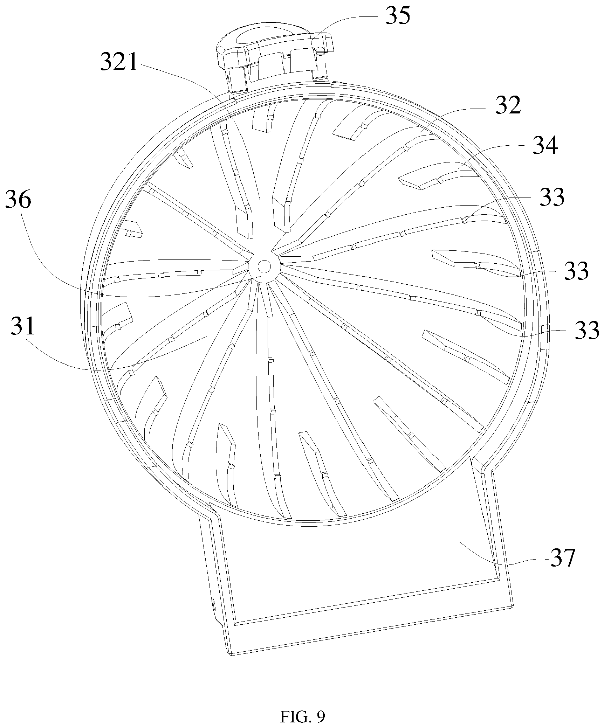

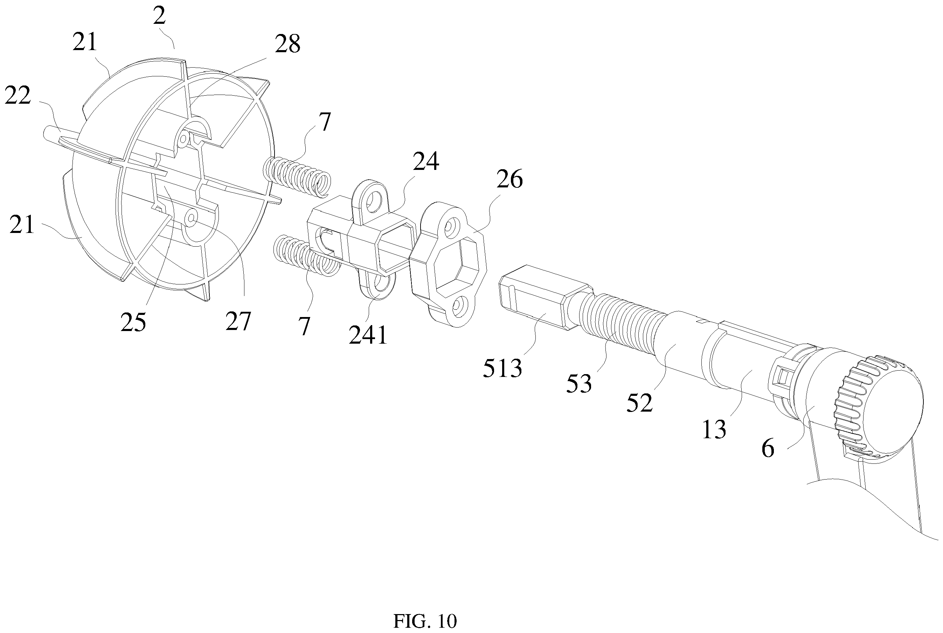

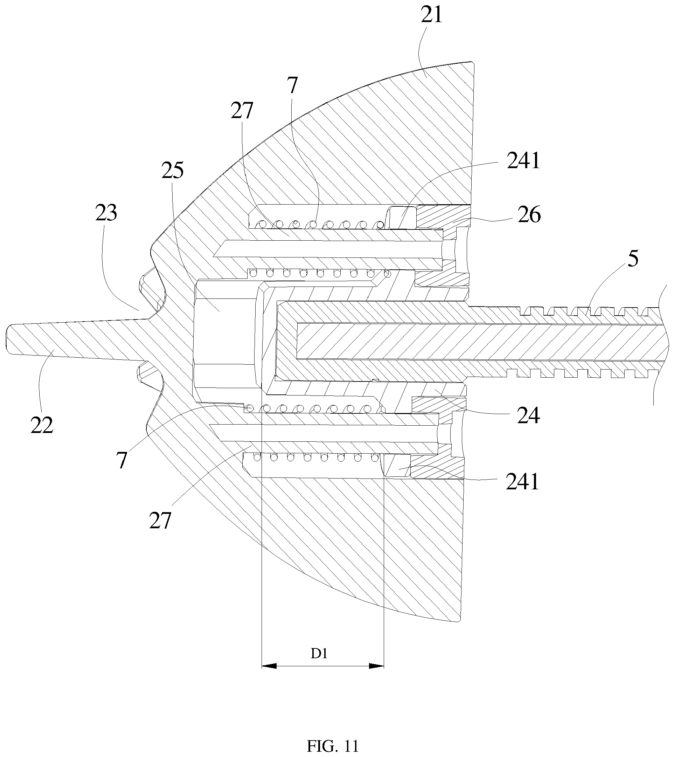

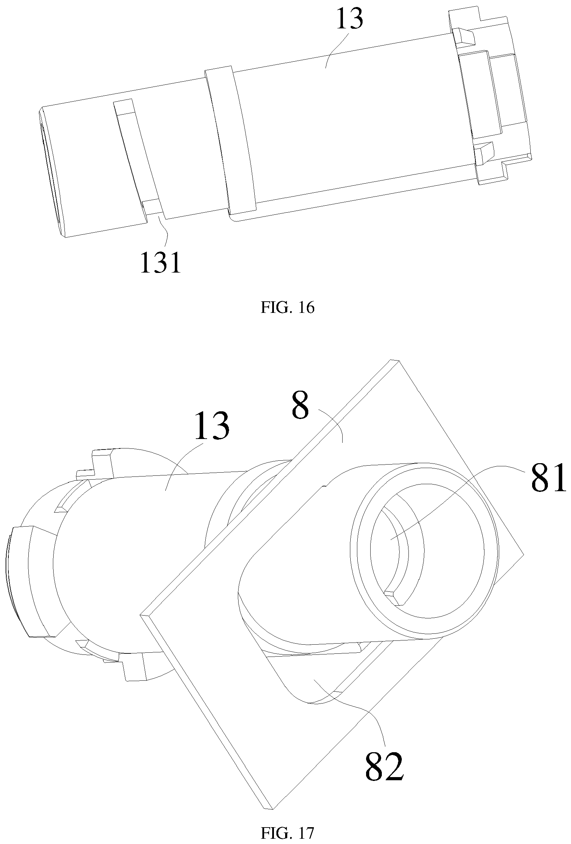

As shown in FIG. 1 to FIG. 11 and FIG. 16 to FIG. 18, they are a preferred embodiment of the present invention.

A hand-operated juicer includes a shell 1 with an inner cavity, and a suction disk is arranged at the bottom of the shell 1, thereby facilitating firm fixation with a table surface.

A juicing head 2 is arranged in the shell 1, a juicing cover 3 is hinged on a front opening 12 of the shell 1, a lock catch 35 for locking the juicing cover 3 at a closed position is arranged between the juicing cover 3 and the shell, an outer surface of the juicing head 2 is an arc-shaped surface and is provided with a plurality of outer convex ribs 21, and an inserting rod 22 for hanging fruits is arranged at the top of the juicing head 2 transversely; and the outer convex ribs 21 extend from the top of the juicing head to an edge of the arc-shaped surface, and a recessed part 23 is arranged between one end, close to the inserting rod 22, of each of the outer convex ribs 21 and the inserting rod 22. The juicing head 2 further includes an elastic part 7 that is arranged in the juicing head 2. The elastic part 7 enables the outer surface of the juicing head 2 to retract to a rear side when a squeezing force from a front side is greater than an elastic force of the elastic part 7. When the inserting rod 22 does not hung fruits and the juicing cover 3 is closed, a drive screw 5 drives the juicing head 2 to move forward to a limit position, the inserting rod 22 abuts against an inner wall of the squeezing cavity 31 so as to block the juicing head 2; moreover, the juicing head 2 can rotate relative to the juicing cover 3, and the elastic part 7 is deformed to make the inserting rod 22 apply a thrust to the inner wall of the squeezing cavity 31.

The juicing cover 3 is connected to the shell 1, the juicing cover 3 is provided with an arc-shaped concave squeezing cavity 31, and the juicing head 2 can be accommodated in the squeezing cavity 31.

The drive screw 5 can rotate around the own axis and can move forward and backward, a rear end of the drive screw 5 is connected to an operator handle 6, and the juicing head 2 is connected to a front end of the drive screw 5 and can rotate along with the drive screw and move forward and backward.

A juicing cup 4 is inserted in a lower part of the shell 1. A cup inlet 11 for the juicing cup to move in and out of an inner cavity of the shell is arranged on the lower part of the shell 1, and a guide surface 37 for inclining downward and guiding the juice to the juicing cup 4 is arranged on the lower part of the squeezing cavity 31.

A plurality of inner convex ribs 32 extending from the middle part of the squeezing cavity 31 to the edge are arranged on the inner wall of the squeezing cavity 31. The inner convex ribs 32 are shaped like an arc matched with an inner surface of the squeezing cavity 31 and are distributed radially, a transition convex rib 34 is arranged between two adjacent ones of the inner convex ribs 32, and a length of the transition convex rib 34 is less than that of the inner convex ribs 32. The inner convex ribs 32 and the transition convex rib 34 are provided with clamping thorns 33.

A sliding groove 321 is surrounded by two adjacent convex ribs 32. When the juicing cover 3 is overturned and opened, an end part of the inserting rod 22 passes through the sliding groove 321 between two adjacent ones of the inner convex ribs 32 and can slide out of the sliding groove 321.

A certain distance is present between an inner end of each of the inner convex ribs 32 and the center point of the squeezing cavity 31, so that an accommodating cavity 36 is surrounded by the inner ends of the inner convex ribs 32, and the accommodating cavity 36 is used to accommodate the end part of the inserting rod 22.

The drive screw 5 includes a screw body 51, a polished rod body 52 and a metal mandrel 55. The metal mandrel 55 is arranged in the screw body 51 and the polished rod body 52; the metal mandrel, the screw body and the polished rod body integrally form the drive screw 5 through injection molding; the drive body 51 and the polished rod body 52 can slide relatively; and the elastic part 7 acts on the screw body 51 and the polished rod body 52 of the drive screw 5 at the same time. The outer surface of the screw body 51 is provided with several thread grooves 511 formed by an external thread section. The coil thread insert 53 is rotatably clamped in several thread grooves 511 of the screw body 51 and is exposed out of the thread grooves 511 to form a drive thread. A limiting joint 513 is formed at the front end of the screw body 51, and limits and restrains the coil thread insert 53.

The shell 1 further includes a clamping connection piece 8 capable of sliding left and right; the clamping connection piece 8 is plate-shaped and placed slantways to be matched with the thread groove 511, and the clamping connection piece 8 has a small hole part 81 and a big hole part 82 that communicate with each other; in the rotary juicing work state of the drive screw 5, the drive screw 5 passes through the small hole part 81, and the hole wall of the small hole part 81 is clamped in the thread grooves 511 of the drive screw 5 to realize threaded fit; and when the drive screw 5 moves backward, the drive screw 5 can pass through the big hole part 82, and the hole wall of the big hole part 82 cannot be clamped into the thread grooves 511 of the drive screw 5. The small hole part 81 is an arc-shaped clamping groove, the big hole part 82 is a rectangular hole, and the arc-shaped clamping groove is located at the side wall of the rectangular hole.

One end of the clamping connection piece 8 is connected to the key 9 on the shell 1, and a spring 10 that keeps the clamping connection piece 8 moving in a direction of the key 9 is arranged at the other end of the clamping connection piece 8. A shaft sleeve 13 is fixed in the shell 1; the drive screw 5 penetrates into the shaft sleeve 13; a mounting box 14 is fixed in the shell 1; the key 9, the clamping connection piece 8 and the spring 10 are arranged in the mounting box 14; the shaft sleeve 13 passes through the mounting box 14; and the shaft sleeve 13 is provided with a notch 131 for the clamping connection piece 8 to enter therethrough.

The working principle and the process of the juicer are as follow.

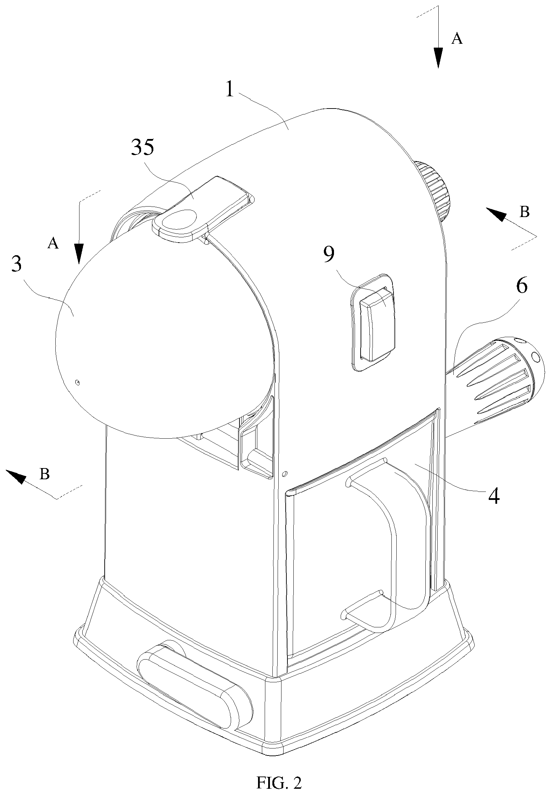

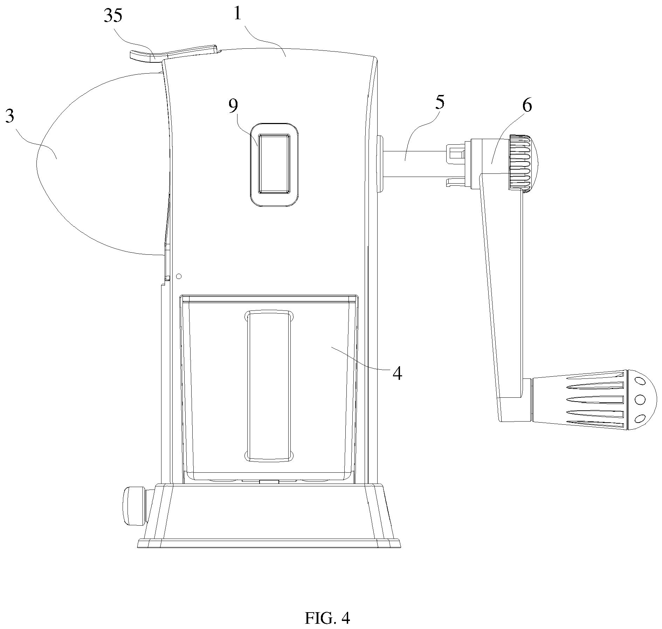

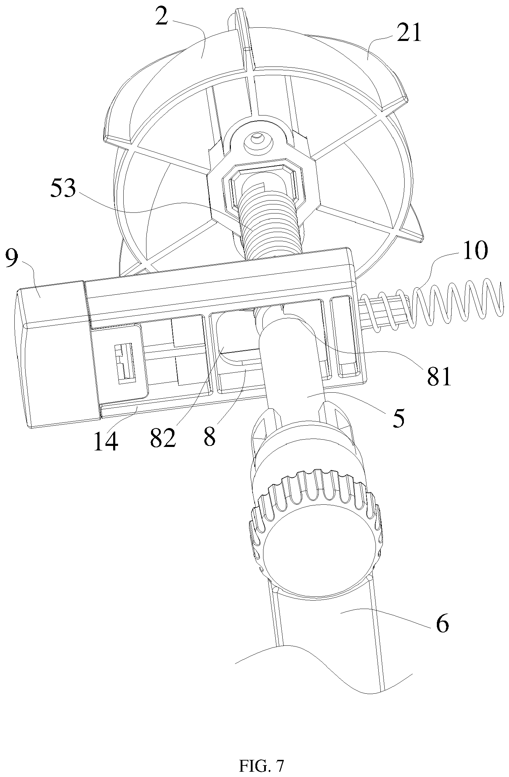

Juicing process: the juicing cup 4 is put into the shell 1 through the cup inlet, the lock catch 35 is overturned downward, and the juicing cover 3 is opened, as shown in FIG. 1. At this time, the juicing head 2 moves forward to be exposed from the front opening 12, fruits (oranges, tangerines and lemons) are cut in half, and the surfaces with pulp are hung on the inserting rod 22. As shown in FIG. 2 to FIG. 3, the juicing cover 3 is closed, and the lock catch 35 locks the juicing cover 3 at the closed position. Then the key 9 is pressed, the clamping connection piece 8 moves backward, the drive screw 5 passes through the big hole part 82, and the hole wall of the big hole part 82 cannot be clamped into the thread groove 511 of the drive screw 5. At this time, the juicing head 2 can rapidly retract to the initial position along with the drive screw 5, as shown in FIG. 4. After release, the clamping connection piece 8 resets under the action of the spring 10, the drive screw 5 passes through the small hole part 81, and the hole wall of the small hole part 81 is clamped into the thread groove 511 of the drive screw 5 to realize threaded fit, as shown in FIG. 7.

The operator handle 6 is rotated to drive the juicing head 2 to rotate along with the drive screw 5. Under the threaded fit action of the clamping connection piece 8 and the thread groove 511 of the drive screw 5, the juicing head 2 moves toward the direction of the juicing cover 3 while rotating along with the drive screw 5. After the peel of the fruit is buckled by the clamping thorns 33 on the inner convex ribs 32 and the transition convex rib 34, the peel does not rotate easily. At this time, the juicing head 2 rotates and stirs in the pulp of the fruit. Combined with the forward movement of the juicing head 2, the fruit is subjected to the squeezing forces of the juicing cover 3 and the juicing head 2 at the same time to complete juicing, as shown in FIG. 2, FIG. 3 and FIG. 6. Fruit juicing is completed in the stirring and squeezing process, so juicing is more complete and the juice yield is high. Juice is guided to the juicing cup 4 located in the shell 1 through the guide surface 37, and then the juicing cup is taken out of the cup inlet 11.

The juicing path of the juicer is arranged transversely. Compared with the vertical juicing path, the juice will not be polluted, a labor-saving lever is formed between the operator handle 6 and the drive screw 5, and the juicing operation is labor-saving.

If the squeezing force is excessively large, the juicing head 2 will overcome the elastic force of the elastic part 7 to move backward and retract relative to the drive screw 5. This means that the juicing head 2 will not forcibly move forward to squeeze the juicing cover 3, thereby avoiding hard squeezing caused by a large squeezing force between the juicing head 2 and the juicing cover 3, preventing the bursting of the juicing cover and the continuous increase of the squeezing force, and achieving convenient and labor-saving operation. After the juicing head continues to rotate and stir the pulp, consumes a part of pulp and overcomes a certain resistance, the juicing head will continue to move forward to squeeze the fruit and the juicing cover. When the clamping connection piece 8 is in contact with the front end head of the drive thread S of the drive screw, the juicing head 2 cannot further move forward and will not squeeze the juicing cover any more, thereby achieving a safety protection function.

After juicing is completed, the lock catch 35 is released, the juicing cover 3 is overturned and opened, the end part of the inserting rod 22 passes through the sliding groove 321 between two adjacent ones of the inner convex ribs 32 and slides out of the sliding groove 321, and the peel hung on the inserting rod 22 is taken out to complete juicing.

### Embodiment 2

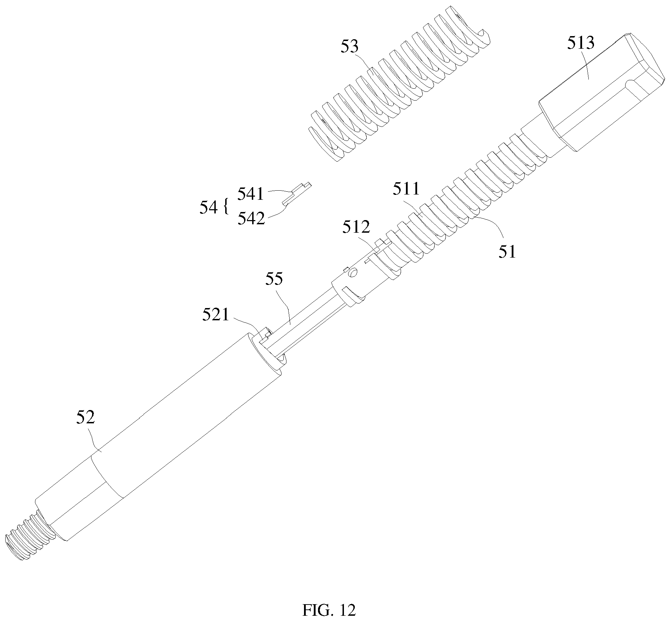

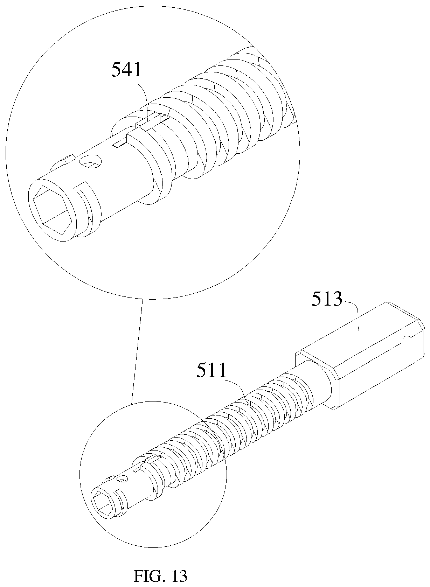

As shown in FIG. 12 to FIG. 15, they are a preferred embodiment of the present invention.

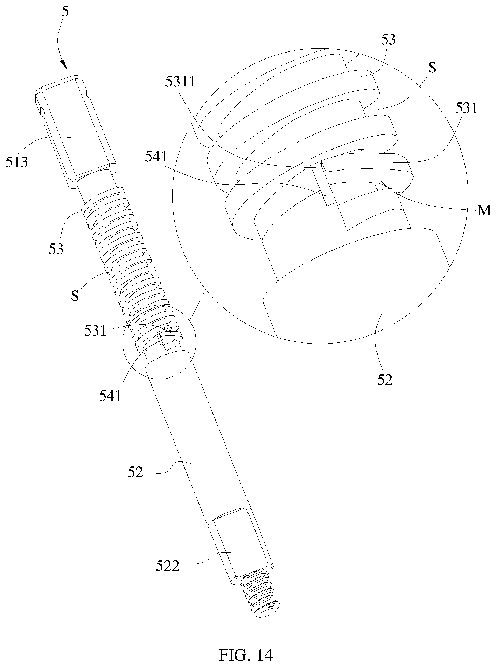

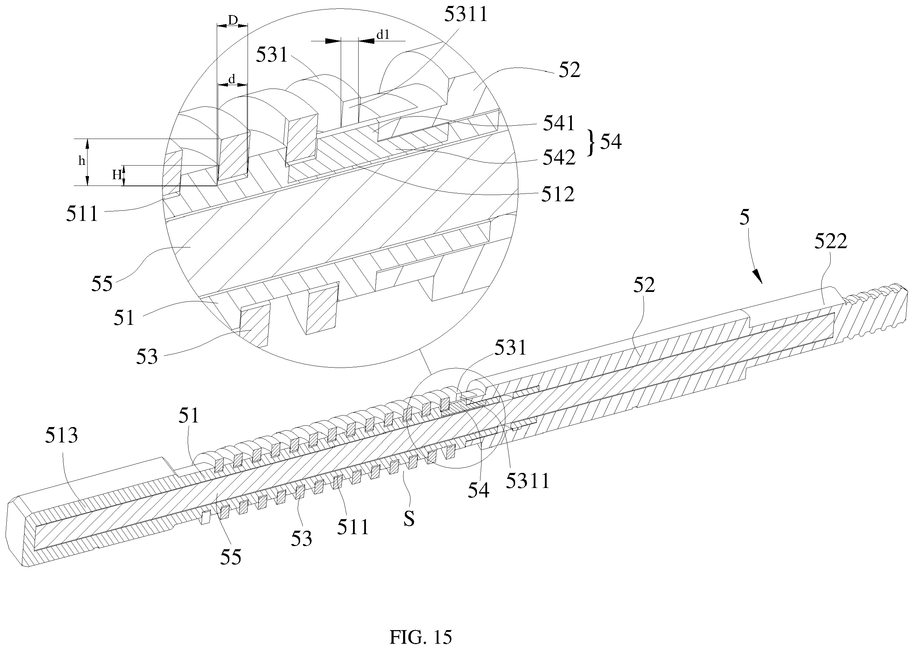

A drive screw 5 includes a screw body 51, a polished rod body 52 and a metal mandrel 55; the metal mandrel 55 is arranged in the screw body 51 and the polished rod body 52, the metal mandrel 55, the screw body 51 and the polished rod body 52 are integrated through injection molding, and an external thread section formed by several thread grooves 511 is arranged on an outer wall of the screw body 51; the coil thread insert 53 is partially and rotatably clamped in the thread groove 511 on the external thread section, a groove width D of the thread groove 511 is matched with a width d of the coil thread insert 53, and a depth H of the thread groove 511 is less than a thickness h of the coil thread insert 53, as shown in FIG. 15. Therefore, the coil thread insert 53 is exposed out of the thread groove 511 to form a drive thread S, as shown in FIG. 14. A limiting joint 513 is arranged at an end part of the screw body 51 and limits and restrains a head end of the coil thread insert 53.

As shown in FIG. 14 to FIG. 15, the coil thread insert 53 includes a compression section 531 located at the tail part, the compression section 531 extends to a tail end 5311 of the coil thread insert 53, the compression section 531 is rotatably arranged on the screw body 51 outside the thread groove 511, and the compression section 531 can perform axial compression along the screw body 51 under a stress and enables the tail end of the coil thread insert 53 to perform compression toward the adjacent previous turn of coil thread insert 53. A surrounding angle of the compression section 531 on the screw body 51 is between 180 degrees and 360 degrees. The drive screw 5 further includes a limiting plug 513 that is arranged at the front end and used for the juicing head 2 to insert. A rear end of the drive screw further includes a rear end plug 522, and the rear end plug 522 is used to be inserted in the operator handle 6 in a limiting manner.

An outer end face M of the tail end of the coil thread insert 53 is an inclined surface inclining toward the adjacent previous turn of the coil thread insert 53. The screw body 51 is axially provided with a metal blocking sheet 54 for blocking the tail end of the coil thread insert 53 from screwing in along a circumferential direction. A width d1 of the last turn of coil of the coil thread insert 53 is less than a width d of the previous turn of coil of the coil thread insert 53, and the width of the last turn of coil of the coil thread insert 53 is gradually reduced towards the tail end part.

An inserting groove 512 is axially formed in the screw body 51 corresponding to the compression section 531 at the tail end of the coil thread insert 53, the metal blocking sheet 54 includes an inserting part 542 and a protruded part 541, the inserting part 542 is inserted into the inserting groove 512, the tail end of the coil thread insert 53 can abut against one side of the protruded part 541, and the protruded part 541 can block the tail end of the coil thread insert 53 from screwing in along the circumferential direction. One end of the polished rod body 52 includes an abutting end 521 connected to the screw body 51, and the abutting end 521 abuts against the other side of the protruded part 541.

The inserting part 542 of the metal blocking sheet 54 is mounted in the mounting groove, the protruded part 541 is exposed out of the mounting groove, one side of the protruded part 541 abuts against the rear end part of the coil thread insert 53, and the other side of the protruded part 541 abuts against the abutting end 521 of the polished rod body 52. The metal blocking sheet 54 is made of metal. The metal blocking sheet 54 can enhance the strength for the drive screw 5 after the coil thread insert 53 bears the rotary stress during idling, thereby preventing breakage caused by the excessively large stress of the polished rod body 52.

The screw body 51 and the polished rod body 52 of the drive screw 5 are plastic rods. Compared with the metal screw, this drive screw has the advantages of light weight, convenient processing and low cost. To make up the defect of low drive thread strength of the plastic screw, this drive screw is further provided with the metal coil thread insert 53 rotatably clamped in the thread groove 511 of the external thread section, and the depth H of the thread groove 511 is less than the thickness h of a metal spring wire 2, so that the coil thread insert 53 rotatably clamped in the thread groove 511 can be exposed out of the thread groove 511 to form a drive thread S, the coil thread insert 53 is made of metal, the strength and wear resistance of the drive thread S are enhanced, the coil thread insert is not prone to wear after long-time use and not prone to slid in the drive process, and stable drive of the drive screw is ensure. When the compression section 531 of the coil thread insert 53 is stressed, the compression section 531 is compressed and deformed to make the insert tail end 5311 close to the adjacent previous turn of coil thread insert 53, so that the distance between the last turn of insert tail end 5311 and the adjacent previous turn of coil thread insert 53 is gradually reduced. When the clamping connection piece 8 in fit with the drive thread and the insert tail end 5311 of the coil thread insert 53 are close to and slides to the adjacent previous section of coil thread insert 53, the noise of the clamping connection piece 8 impacting the adjacent previous section of coil thread insert 53 is low.

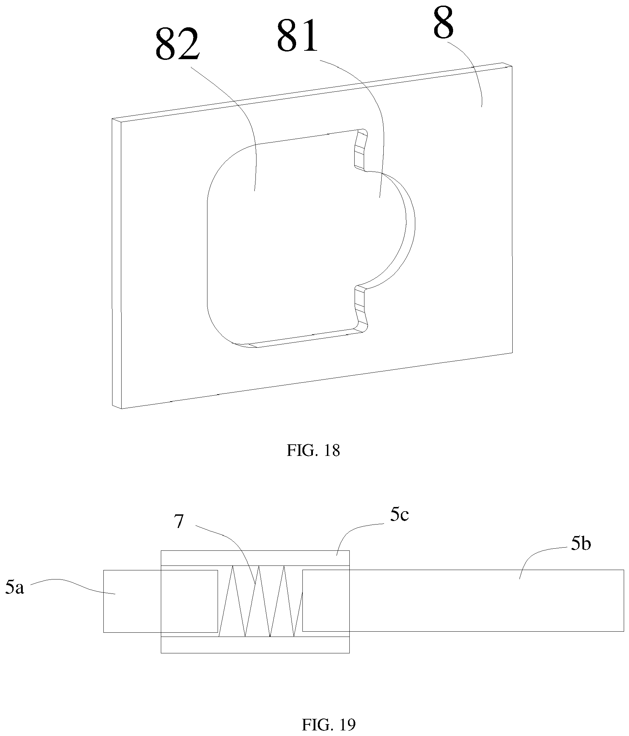

As shown in FIG. 19, the elastic part 7 may further be set by the following structure. The drive screw 5 includes a front section 5a and a rear section 5b, the front section 5a is in inserting connection with the juicing head 2, the front section 5a and the rear section 5b are inserted in a drive sleeve 5c and can slide relatively and rotate together with the drive sleeve 5c, and the elastic part 7 is arranged in the drive sleeve 5c and acts on the front section and the rear section of the drive screw 5 at the same time.

### Embodiment 3

As shown in FIG. 1 to FIG. 11, the present invention discloses a juicing assembly for a juicer, including a juicing cover 3, a juicing head 2 and a drive screw 5 connected to the juicing head 2. The juicing cover 3 is provided with an arc-shaped concave squeezing cavity 31; the squeezing cavity 31 can accommodate the juicing head 2; an inserting rod 22 for hanging fruits is arranged at the transverse top of an outer surface of the juicing head 2; and several inner convex ribs 32 extending from a middle part of the squeezing cavity 31 to an edge are arranged on the inner wall of the squeezing cavity 31. The inner convex ribs 32 are uniformly distributed along the inner wall of the squeezing cavity 31, and a transition convex rib 34 is arranged between two adjacent ones of the inner convex ribs 32. The transition convex rib 34 and the inner convex ribs 32 are provided with clamping thorns 33. A certain distance is present between an inner end of each of the inner convex ribs 32 and a center point of the squeezing cavity 31, so that an accommodating cavity 36 is surrounded by the inner ends of the inner convex ribs 32, and the accommodating cavity 36 can accommodate an end part of the inserting rod 22.

The outer surface of the juicing head 2 is an arc-shaped surface and is provided with a plurality of outer convex ribs 21, the juicing head 2 further includes an elastic part 7 that is arranged in the juicing head 2 and on the drive screw 5, and the elastic part 7 enables the outer surface of the juicing head 2 to retract toward the other side when the squeezing force from one side is greater than an elastic force of the elastic part 7. The juicing head 2 is internally provided with a concave cavity 25, and the elastic part 7 is sleeved on the bolt fixing column 27 in the concave cavity 25 and acts on the drive screw 5. Specifically, the concave cavity 25 is formed at the rear end of the juicing head 2, the drive screw 5 capable of sliding forward and backward relative to the juicing head 2 is restrained in the concave cavity 25, the drive screw 5 and the concave cavity 25 on the juicing head 2 are in key groove fit to make the two rotate synchronously and slide relatively, the elastic part 7 directly acts on the connecting head 24 to make the connecting head 24 keep moving towards the direction of the drive screw 5, two symmetrically arranged lug parts 241 are arranged on the side wall of the connecting head 24, a distance D 1 is present between a bottom surface of the connecting head 24 and bottom surfaces of the lug parts 241, two elastic parts 7 are provided, and the lug parts 241 can compress the elastic parts 7 and transfer the thrust from the drive screw 5 to the juicing head 2. Compared with the fact that the elastic parts 7 are arranged between the concave cavity 25 and the bottom surface of the connecting head 24, this structure can set the elastic part longer, and the elastic part can be compressed more greatly, thereby providing a more appropriate elastic force to the juicing head. The front end of the drive screw 5 is inserted in the connecting head 24, the drive screw 5 rotates to drive the connecting head 21 and the juicing head 2 to rotate together, and the elastic part 7 indirectly acts on the drive screw 5.

A locking piece 26 is arranged in the concave cavity 25, and the locking piece 26 is connected to the bolt fixing column 27 for sleeving the elastic part 7 through a bolt to prevent the connecting head 24 from popping out toward a direction of the drive screw 5. A reinforcing rib 28 is fixedly connected between the concave cavity 25 and an inner concave surface of the juicing head 2.

The outer surface of the juicing head 2 is an arc-shaped surface and is provided with a plurality of outer convex ribs 21, the outer convex ribs 21 extend from the top of the juicing head to the edge of the arc-shaped surface, and a concave part 23 is arranged between one end, close to the inserting rod 22, of each of the outer convex ribs 21 and the inserting rod 22. When the inserting rod 22 abuts against the inner wall of the squeezing cavity 31, a gap is still present between the inner convex ribs 32 and the outer convex ribs 21. When the juicing cover 3 is overturned and opened, the end part of the inserting rod 22 passes through the sliding groove 321 between two adjacent ones of the inner convex ribs 32 and can slide out of the sliding groove 321.

In a case of excessively short distance, excessively small gap and excessively large mutual action force between the juicing head 2 and the corresponding juicing cover 3 in the working process of the juicing assembly, the juicing head 2 will overcome the elastic force of the elastic part 7 to move backward and retract relative to the drive screw, thereby preventing the juicing head 2 from further squeezing in the direction of the juicing cover 3 to avoid the bursting of the juicing cover 3 and the increase of the squeezing force, ensuring the service life of the juicer, and making an operator feel simple and labor-saving operation no matter in the previous stage or the later stage of juicing.

## Claims

1. A hand-operated juicer, comprising:
a shell (1);
a juicing head (2), **characterized in that** an outer surface of the juicing head (2) is an arc-shaped surface and is provided with a plurality of outer convex ribs (21), and an inserting rod (22) for hanging fruit is arranged at the transverse top of the juicing head (2);
a juicing cover (3), connected to the shell (1), **characterized in that** the juicing cover (3) is provided with an arc-shaped concave squeezing cavity (31), and the squeezing cavity (31) is capable of accommodating the juicing head (2); and
a drive screw (5), capable of rotating around an axis of the drive screw (5) and moving forward and backward, **characterized in that** a rear end of the drive screw (5) is connected to an operator handle (6), and the juicing head (2) is connected to a front end of the drive screw (5) and capable of rotating along with the drive screw (5) and moving forward and backward.

2. The hand-operated juicer according to claim 1, further comprising:
a clamping connection piece (8) capable of sliding left and right, **characterized in that** the clamping connection piece (8) is provided with a small hole part (81) and a big hole part (82) which communicate with each other, the drive screw passes through the small hole part (81), a hole wall of the small hole part (81) is clamped into a thread groove (511) of the drive screw (5) to achieve threaded fit, and when the drive screw (5) moves backward, the drive screw (5) is capable of passing through the big hole part (82) and a hole wall of the big hole part (82) is unable to be clamped into the thread groove (511) of the drive screw(5).

3. The hand-operated juicer according to claim 1 or 2,
**characterized in that** several inner convex ribs (32) extending from a middle part of the squeezing cavity to an edge are arranged on an inner wall of the squeezing cavity, and the inner convex ribs (32) are distributed uniformly along the inner wall of the squeezing cavity; and
an inner end of each of the inner convex ribs (32) has a certain distance from a center point of the squeezing cavity, so that an accommodating cavity (36) is surrounded by the inner ends of the inner convex ribs (32), and the accommodating cavity (36) is capable of accommodating the end part of the inserting rod (22).

4. The hand-operated juicer according to claim 3, **characterized in that** a transition convex rib (34) is arranged between two adjacent ones of the inner convex ribs (32), and the inner convex ribs (32) and the transition convex rib (34) are provided with clamping thorns (33).

5. The hand-operated juicer according to claim 3,
the juicing cover (3) is hinged on the shell (1); when the inserting rod (22) abuts against the inner wall of the squeezing cavity, a gap is still present between the inner convex ribs (32) and the outer convex ribs (21); and when the squeezing cover is overturned and opened, an end part of the inserting rod (22) passes through a sliding groove (321) between two adjacent ones of the inner convex ribs (32) and is capable of sliding out of the sliding groove (321).

6. The hand-operated juicer according to claim 2,
**characterized in that** one end of the clamping connection piece (8) is connected to a key (9) on the shell (1), and the other end of the clamping connection piece (8) is provided with a spring (10) that keeps the clamping connection piece (8) moving toward a direction of the key (9);
a shaft sleeve (13) is fixed in the shell (1), the drive screw (5) penetrates into the shaft sleeve (13), and the shaft sleeve (13) is provided with a notch (131) for the small hole part (81) of the clamping connection part to enter therethrough; and
a mounting box (14) is fixed in the shell (1), the key (9), the clamping connection piece (8) and the spring (10) are arranged in the mounting box (14), and the shaft sleeve (13) passes through the mounting box (14).

7. The hand-operated juicer according to claim 1 or 2,
**characterized in that** the juicing head (2) further comprises an elastic part (7) arranged in the juicing head (2), the elastic part (7) is located between the juicing head (2) and the drive screw (5), one end of the elastic part (7) acts on the juicing head (2), and the other end of the elastic part (7) acts on the drive screw (5);and the elastic part (7) enables the outer surface of the juicing head (2) to retract to a rear side when a squeezing force from a front side is greater than an elastic force of the elastic part (7) .

8. The hand-operated juicer according to claim 7,**characterized in that** the juicing head (2) is internally provided with an concave cavity (25), a connecting head (24) is restrained in the concave cavity (25), the connecting head (24) and the concave cavity (25) are in key (9) groove fit and are capable of sliding forward and backward relatively, a front end of the drive screw (5) is inserted in the connecting head (24);
a bolt fixing column (27) is arranged in the concave cavity (25), and the elastic part (7) is sleeved on the bolt fixing column (27) and acts on the drive screw (5); and
a locking piece (26) is arranged in the concave cavity (25), and the locking piece (26) is connected to the bolt fixing column (27) through a bolt to prevent the connecting head (24) from popping out toward a direction of the drive screw (5).

9. The hand-operated juicer according to claim 8,
**characterized in that** a reinforcing rib (28) is fixedly connected between an outer wall of the concave cavity (25) and an inner concave surface of the juicing head (2); and
each of the outer convex ribs (21) extends from the top of the juicing head (2) to an edge of the arc-shaped surface, and a recessed part (23) is arranged between one end, close to the inserting rod (22), of each of the outer convex ribs (21) and the inserting rod (22).

10. The hand-operated juicer according to claim 1, **characterized in that** the drive screw (5) comprises:
a screw body (51), an outer wall of the screw body (51) being provided with an outer thread section formed by several thread grooves (511);
a coil thread insert (53), partially rotatably clamped in the thread grooves (511) on the outer thread section, **characterized in that** a groove width of each of the thread grooves (511) is matched with a width of the coil thread insert (53), and a depth of each of the thread grooves (511) is less than a thickness of the coil thread insert(53), so that the coil thread insert (53) is exposed out of the thread grooves (511) to form a drive thread (S).

11. The hand-operated juicer according to claim 10,
**characterized in that** the coil thread insert (53) comprises a compression section (531) located at a tail part of the coil thread insert (53), the compression section (531) extends to an insert tail end (5311) of the coil thread insert (53), the compression section (531) is rotatably arranged on the screw body (51) outside the thread grooves (511), and the compression section (531) is capable of being compressed along an axial direction of the screw body (51) under the condition of being stressed, such that the insert tail end (5311) of the coil thread insert (53) is compressed toward the adjacent previous turn of the coil thread insert (53).

12. The hand-operated juicer according to claim 11, **characterized in that** a width of a coil of the last (d1) turn of the coil thread insert (53) is less than a width of a coil of the previous (d) turn of the coil thread insert (53), and a width of a coil of the last turn of the coil thread insert (53) gradually decreases towards a width of the tail end part.

13. The hand-operated juicer according to claim 11,
**characterized in that** an outer end face (M) of the tail end of the coil thread insert (53) is an inclined surface inclining toward the adjacent previous turn of the coil thread insert (53);
a surrounding angle of the compression section (531) on the screw body (51) is between 180 degrees and 360 degrees; and
the screw body (51) is axially provided with a metal blocking sheet (54) for blocking the tail end of the coil thread insert (53) from screwing in along a circumferential direction.

14. The hand-operated juicer according to claim 11,**characterized in that** the screw body (51) corresponding to the compression section (531) at the tail end of the coil thread insert (53) is axially provided with an inserting groove (512), the metal blocking sheet (54) comprises an inserting part and a protruded part, the inserting part is inserted into the inserting groove (512), the tail end of the coil thread insert (53) is capable of abutting against one side of the protruded part, and the protruded part is capable of blocking the tail end of the coil thread insert (53) from screwing in along the circumferential direction.

15. The hand-operated juicer according to claim 14, **characterized in that** the drive screw(5)further comprises:
a polished rod body (52), **characterized in that** one end of the polished rod body (52) comprises an abutting end(521) connected to the screw body (51), and the abutting end (521) abuts against the other side of the protruded part;
a metal mandrel (55), arranged in the screw body (51) and the polished rod body (52), **characterized in that** the metal mandrel (55), the screw body (51) and the polished rod body (52) integrally form the drive screw (5) through injection molding; and
a limiting joint, arranged at an end part of the screw body (51) and limiting and restraining a head end of the coil thread insert (53).

## Patentansprüche

1. Handbetriebene Entsafter, umfassend:
eine Schale (1);
einen Entsaftungskopf (2), **dadurch gekennzeichnet, dass** eine Außenfläche des Entsaftungskopfes (2) eine bogenförmige Fläche ist und mit einer Vielzahl von konvexen Außenrippen (21) versehen ist, und wobei eine Einführstange (22) zum Einhängen von Früchten an der oberen Querseite des Entsaftungskopfes (2) angeordnet ist;
einen mit der Schale (1) verbundenen Entsaftungsdeckel (3), **dadurch gekennzeichnet, dass** der Entsaftungsdeckel (3) mit einem bogenförmigen, konkaven Quetschhohlraum (31) versehen ist, und wobei der Quetschhohlraum (31) den Entsaftungskopf (2) aufnehmen kann; und
eine um eine Achse der Antriebsschraube (5) drehbare und vorwärts und rückwärts bewegliche Antriebsschraube (5), **dadurch gekennzeichnet, dass** ein Hinterende der Antriebsschraube (5) mit einem Bedienerhandgriff (6) verbunden ist, und der Entsaftungskopf (2) mit einem Vorderende der Antriebsschraube (5) verbunden ist und sich gemeinsam mit der Antriebsschraube (5) drehen und vorwärts und rückwärts bewegen kann.

2. Handbetriebene Entsafter nach Anspruch 1, ferner umfassend:
ein nach links und rechts verschiebbares Klemmverbindungsstück (8), **dadurch gekennzeichnet, dass** das Klemmverbindungsstück (8) mit einem Kleinlochteil (81) und einem Großlochteil (82) versehen ist, die miteinander kommunizieren, wobei die Antriebsschraube durch das Kleinlochteil (81) hindurchgeführt wird, wobei eine Lochwand des Kleinlochteils (81) in eine Gewindenut (511) der Antriebsschraube (5) geklemmt wird, wodurch ein Gewindepassung erreicht wird, und wenn sich die Antriebsschraube (5) rückwärts bewegt, kann die Antriebsschraube (5) durch das Großlochteil (82) hindurchgeführten und eine Lochwand des Großlochteils (82) kann nicht in die Gewindenut (511) der Antriebsschraube (5) geklemmt werden.

3. Handbetriebene Entsafter nach Anspruch 1 oder 2,
**dadurch gekennzeichnet, dass** mehrere konvexe Innenrippen (32), die sich von einem Mittelteil des Quetschhohlraums zu einer Kante erstrecken, an einer Innenwand des Quetschhohlraums angeordnet sind, und die konvexen Innenrippen (32) gleichmäßig entlang der Innenwand des Quetschhohlraums verteilt sind; und
ein Innenende jeder der konvexen Innenrippen (32) einen bestimmten Abstand von einem Mittelpunkt des Quetschhohlraums hat, so dass ein Aufnahmehohlraum (36) von den Innenenden der konvexen Innenrippen (32) umgeben ist, und der Aufnahmehohlraum (36) den Endteil der Einführstange (22) aufnehmen kann.

4. Handbetriebene Entsafter nach Anspruch 3,
**dadurch gekennzeichnet, dass** eine konvexe Übergangsrippe (34) zwischen zwei benachbarten der konvexen Innenrippen (32) angeordnet ist, und die konvexen Innenrippen (32) und die konvexe Übergangsrippe (34) mit Klemmdornen (33) versehen sind.

5. Handbetriebene Entsafter nach Anspruch 3,
der Entsaftungsdeckel (3) an der Schale (1) klappbar ist; wenn die Einführstange (22) an der Innenwand des Quetschhohlraums anliegt, ein Spalt zwischen den konvexen Innenrippen (32) und den konvexen Außenrippen (21) noch vorhanden ist; und wenn der Quetschdeckel umgeschwenkt und geöffnet wird, ein Endteil der Einführstange (22) durch eine Gleitnut (321) zwischen zwei benachbarten der konvexen Innenrippen (32) hindurchgeführt wird und aus der Gleitnut (321) verschieben kann.

6. Handbetriebene Entsafter nach Anspruch 2,
**dadurch gekennzeichnet, dass** ein Ende des Klemmverbindungsstücks (8) mit einem Schlüssel (9) an der Schale (1) verbunden ist und das andere Ende des Klemmverbindungsstücks (8) mit einer Feder (10) versehen ist, welche das Klemmverbindungsstück (8) in einer Richtung des Schlüssels (9) in Bewegung hält;
wobei eine Wellenhülse (13) in der Schale (1) befestigt ist, wobei die Antriebsschraube (5) in die Wellenhülse (13) eindringt, und wobei die Wellenhülse (13) mit einer Kerbe (131) versehen ist, damit der Kleinlochteil (81) des Klemmverbindungsteils hindurchgehen kann; und
wobei ein Montagekasten (14) in der Schale (1) befestigt ist, wobei die Schlüssel (9), das Klemmverbindungsstück (8) und die Feder (10) in dem Montagekasten (14) angeordnet sind und die Wellenhülse (13) durch den Montagekasten (14) hindurchgeführt ist.

7. Handbetriebene Entsafter nach Anspruch 1 oder 2,
**dadurch gekennzeichnet, dass** der Entsaftungskopf (2) ferner ein im Entsaftungskopf (2) angeordnetes elastisches Teil (7) umfasst, wobei das elastische Teil (7) zwischen dem Entsaftungskopf (2) und der Antriebsschraube (5) positioniert ist, wobei ein Ende des elastischen Teils (7) auf den Entsaftungskopf (2) und das andere Ende des elastischen Teils (7) auf die Antriebsschraube (5) einwirkt; und wobei das elastische Teil (7) ermöglicht, dass sich die Außenfläche des Entsaftungskopfes (2) zu einer Rückseite zurückbewegt, wenn eine Quetschkraft von einer Vorderseite größer ist als eine elastische Kraft des elastischen Teils (7).

8. Handbetriebene Entsafter nach Anspruch 7, **dadurch gekennzeichnet, dass** der Entsaftungskopf (2) im Inneren mit einem konkaven Hohlraum (25) versehen ist, wobei ein Verbindungskopf (24) in dem konkaven Hohlraum (25) zurückgehalten wird, wobei der Verbindungskopf (24) und der konkave Hohlraum (25) sich in einer Nutenpassung mit dem Schlüssel (9) befinden und jeweils vorwärts und rückwärts verschiebbar ist, wobei ein Vorderende der Antriebsschraube (5) in den Verbindungskopf (24) eingeführt ist;
eine Bolzenbefestigungssäule (27) in dem konkaven Hohlraum (25) angeordnet ist und das elastische Teil (7) mit der Bolzenbefestigungssäule (27) ummantelt ist und auf die Antriebsschraube (5) einwirkt; und
ein Verriegelungsstück (26) in dem konkaven Hohlraum (25) angeordnet ist, und das Verriegelungsstück (26) mit der Bolzenbefestigungssäule (27) mittels eines Bolzens verbunden ist, um den Verbindungskopf (24) vor einem Herausspringen in Richtung der Antriebsschraube (5) zu schützen.

9. Handbetriebene Entsafter nach Anspruch 8,
**dadurch gekennzeichnet, dass** eine Verstärkungsrippe (28) fest zwischen einer Außenwand des konkaven Hohlraums (25) und einer konkaven Innenfläche des Entsaftungskopfes (2) verbunden ist; und
jede der konvexen Außenrippen (21) sich von der Oberseite des Entsaftungskopfes (2) zu einer Kante der bogenförmigen Fläche erstreckt und wobei ein vertiefter Teil (23) zwischen einem Ende nahe der Einführstange (22) jeder der konvexen Außenrippen (21) und der Einführstange (22) angeordnet ist.

10. Handbetriebene Entsafter nach Anspruch 1, **dadurch gekennzeichnet, dass** die Antriebsschraube (5) umfasst:
einen Schraubenkörper (51), wobei eine Außenwand des Schraubenkörpers (51) mit einem durch mehrere Gewindenuten (511) gebildeten Außengewindeabschnitt versehen ist;
einen Spulengewindeeinsatz (53), der teilweise drehbar in die Gewindenuten (511) am Außengewindeabschnitt geklemmt ist, **dadurch gekennzeichnet, dass** eine Nutbreite jeder der Gewindenuten (511) an eine Breite des Spulengewindeeinsatzes (53) angepasst ist, und wobei eine Tiefe jeder der Gewindenuten (511) geringer ist als eine Dicke des Spulengewindeeinsatzes (53), so dass der Spulengewindeeinsatz (53) zur Bildung eines Antriebsgewindes (S) aus den Gewindenuten (511) freigelegt wird.

11. Handbetriebene Entsafter nach Anspruch 10,
**dadurch gekennzeichnet, dass** der Spulengewindeeinsatz (53) einen an einem Schwanzteil des Spulengewindeeinsatzes (53) positionierten Verdichtungsabschnitt (531) umfasst, wobei der Verdichtungsabschnitt (531) sich zu einem Einsatzschwanzende (5311) des Spulengewindeeinsatzes (53) erstreckt, wobei der Verdichtungsabschnitt (531) drehbar auf dem Schraubenkörper (51) außerhalb der Gewindenuten (511) angeordnet ist, und wobei der Verdichtungsabschnitt (531) entlang einer axialen Richtung des Schraubenkörpers (51) unter dem Zustand der Belastung verdichtet werden kann, so dass das Einsatzschwanzende (5311) des Spulengewindeeinsatzes (53) zur benachbarten früheren Windung des Spulengewindeeinsatzes (53) hin verdichtet wird.

12. Handbetriebene Entsafter nach Anspruch 11, **dadurch gekennzeichnet, dass** die Spulenbreite der letzten (d1) Windung des Spulengewindeeinsatzes (53) geringer ist als die Spulenbreite der früheren (d) Windung des Spulengewindeeinsatzes (53), und wobei die Spulenbreite der letzten Windung des Spulengewindeeinsatzes (53) in Richtung der Breite des Schwanzendteils schrittweise abnimmt.

13. Handbetriebene Entsafter nach Anspruch 11,
**dadurch gekennzeichnet, dass** eine Außenendfläche (M) des Schwanzendes des Spulengewindeeinsatzes (53) eine zur benachbarten früheren Windung des Spulengewindeeinsatzes (53) geneigte Fläche ist;
ein Umgebungswinkel des Verdichtungsabschnitts (531) am Schraubenkörper (51) zwischen 180 Grad und 360 Grad beträgt; und
der Schraubenkörper (51) axial mit einem metallischen Sperrblech (54) versehen ist, um das Schwanzende des Spulengewindeeinsatzes (53) am Einschrauben entlang einer Umfangsrichtung zu verhindern.

14. Handbetriebene Entsafter nach Anspruch 11, **dadurch gekennzeichnet, dass** der dem Verdichtungsabschnitt (531) entsprechende Schraubenkörper (51) am Schwanzende des Spulengewindeeinsatzes (53) axial mit einer Einführnut (512) versehen ist, wobei das metallische Sperrblech (54) ein Einführteil und ein hervorstehendes Teil umfasst, wobei das Einführteil in die Einführnut (512) eingeführt wird, wobei das Schwanzende des Spulengewindeeinsatzes (53) gegen eine Seite des hervorstehenden Teils anliegen kann, und wobei das hervorstehende Teil das Schwanzende des Spulengewindeeinsatzes (53) am Eindrehen entlang der Umfangsrichtung verhindern kann.

15. Handbetriebene Entsafter nach Anspruch 14, **dadurch gekennzeichnet, dass** die Antriebsschraube (5) ferner umfasst:
einen Polierstangenkörper (52), **dadurch gekennzeichnet, dass** ein Ende des Polierstangenkörpers (52) ein mit dem Schraubenkörper (51) verbundenes Anlageende (521) umfasst, und wobei das Anlageende (521) gegen die andere Seite des hervorstehenden Teils anliegt;
einen im Schraubenkörper (51) und dem Polierstangenkörper (52) angeordneten metallischen Dorn (55), **dadurch gekennzeichnet, dass** der metallische Dorn (55), der Schraubenkörper (51) und der Polierstangenkörper (52) einstückig die Antriebsschraube (5) mittels Spritzgießen bilden; und
ein an einem Endteil des Schraubenkörpers (51) angeordnetes Grenzgelenk, das ein Kopfende des Spulengewindeeinsatzes (53) begrenzt und zurückhält.

## Revendications

1. Centrifugeuse manuelle, comprenant :
une coque (1) ;
une tête d'extraction (2), **caractérisée en ce que**, une surface extérieure de la tête d'extraction (2) est une surface en forme d'arc et est pourvue d'une pluralité de nervures convexes extérieures (21), et une tige d'insertion (22) destinée à suspendre des fruits est disposée sur la partie supérieure transversale de la tête d'extraction (2) ;
un couvercle d'extraction (3), relié à la coque (1), **caractérisée en ce que**, le couvercle d'extraction (3) est pourvu d'une cavité de pressage concave en forme d'arc (31), et la cavité de pressage (31) est capable de loger la tête d'extraction (2) ; et
une vis d'entraînement (5), capable de pivoter autour d'un axe de la vis d'entraînement (5) et de se déplacer en avant et en arrière, **caractérisée en ce que**, une extrémité arrière de la vis d'entraînement (5) est reliée à une poignée opérateur (6), et la tête d'extraction (2) est reliée à une extrémité avant de la vis d'entraînement (5) et capable de pivoter avec la vis d'entraînement (5) et de se déplacer en avant et en arrière.

2. Centrifugeuse manuelle selon la revendication 1, comprenant en outre :
un élément de liaison par serrage (8) capable de glisser à gauche et à droite, **caractérisée en ce que**, l'élément de liaison par serrage (8) est pourvu d'une partie de petit trou (81) et d'une partie de grand trou (82) qui communiquent l'une avec l'autre, la vis d'entraînement traverse la partie de petit trou (81), une paroi de trou de la partie de petit trou (81) est serrée dans une rainure de filetage (511) de la vis d'entraînement (5) afin de réaliser un ajustement fileté, et lorsque la vis d'entraînement (5) se déplace en arrière, la vis d'entraînement (5) est capable de traverser la partie de grand trou (82) et une paroi de trou de la partie de grand trou (82) est incapable d'être serrée dans la rainure de filetage (511) de la vis d'entraînement (5).

3. Centrifugeuse manuelle selon la revendication 1 ou 2,
**caractérisée en ce que**, plusieurs nervures convexes intérieures (32) s'étendant d'une partie centrale de la cavité de pressage à un bord sont disposées sur une paroi intérieure de la cavité de pressage, et les nervures convexes intérieures (32) sont réparties uniformément le long de la paroi intérieure de la cavité de pressage ; et
une extrémité intérieure de chacune des nervures convexes intérieures (32) est à une certaine distance d'un point central de la cavité de pressage, de sorte qu'une cavité de logement (36) est entourée des extrémités intérieures des nervures convexes intérieures (32), et la cavité de logement (36) peut loger la partie d'extrémité de la tige d'insertion (22).

4. Centrifugeuse manuelle selon la revendication 3,
**caractérisée en ce que**, une nervure convexe de transition (34) est disposée entre deux nervures adjacentes des nervures convexes intérieures (32) adjacentes, et les nervures convexes intérieures (32) et la nervure convexe de transition (34) sont pourvues d'épines de serrage (33).

5. Centrifugeuse manuelle selon la revendication 3,
le couvercle d'extraction (3) est articulé sur la coque (1) ; lorsque la tige d'insertion (22) vient en butée contre la paroi intérieure de la cavité de pressage, un espace est encore présent entre les nervures convexes intérieures (32) et les nervures convexes extérieures (21) ; et lorsque le couvercle de pressage est relevé et ouvert, une partie d'extrémité de la tige d'insertion (22) traverse une rainure de glissement (321) entre deux nervures adjacentes des nervures convexes intérieures (32) et est capable de glisser hors de la rainure de glissement (321).

6. Centrifugeuse manuelle selon la revendication 2,
**caractérisée en ce que**, une extrémité de l'élément de liaison par serrage (8) est reliée à une clavette (9) sur la coque (1), et l'autre extrémité de l'élément de liaison par serrage (8) est pourvue d'un ressort (10) qui maintient l'élément de liaison par serrage (8) à se déplacer dans une direction de la clavette (9) ;
un manchon d'arbre (13) est fixé dans la coque (1), la vis d'entraînement (5) pénètre dans le manchon d'arbre (13), et le manchon d'arbre (13) est pourvue d'une encoche (131) permettant à la partie de petit trou (81) de la partie de liaison par serrage d'entrer par celle-ci ; et
une boîte de montage (14) est fixée dans la coque (1), la clavette (9), l'élément de liaison par serrage (8) et le ressort (10) sont disposés dans la boîte de montage (14), et le manchon d'arbre (13) traverse la boîte de montage (14).

7. Centrifugeuse manuelle selon la revendication 1 ou 2,
**caractérisée en ce que**, la tête d'extraction (2) comprend en outre une partie élastique (7) disposée dans la tête d'extraction (2), la partie élastique (7) est située entre la tête d'extraction (2) et la vis d'entraînement (5), une extrémité de la partie élastique (7) agit sur la tête d'extraction (2), et l'autre extrémité de la partie élastique (7) agit sur la vis d'entraînement (5) ; et la partie élastique (7) permet à la surface extérieure de la tête d'extraction (2) de se rétracter vers un côté arrière lorsqu'une force de pressage provenant d'un côté avant est supérieure à la force élastique de la partie élastique (7).

8. Centrifugeuse manuelle selon la revendication 7, **caractérisée en ce que**, la tête d'extraction (2) est pourvue intérieurement d'une cavité concave (25), une tête de liaison (24) est retenue dans la cavité concave (25), la tête de liaison (24) et la cavité concave (25) sont en ajustement par rainure de clavette (9) et sont capables de glisser en avant et en arrière l'une par rapport à l'autre, une extrémité avant de la vis d'entraînement (5) est insérée dans la tête de liaison (24) ;
une colonne de fixation de boulon (27) est disposée dans la cavité concave (25), et la partie élastique (7) est manchonnée sur la colonne de fixation de boulon (27) et agit sur la vis d'entraînement (5) ; et
un élément de verrouillage (26) est disposé dans la cavité concave (25), et l'élément de verrouillage (26) est relié à la colonne de fixation de boulon (27) par l'intermédiaire d'un boulon afin d'empêcher la tête de liaison (24) de sortir dans une direction de la vis d'entraînement (5).

9. Centrifugeuse manuelle selon la revendication 8,
**caractérisée en ce que**, une nervure de renforcement (28) est reliée de manière fixe entre une paroi extérieure de la cavité concave (25) et une surface concave intérieure de la tête d'extraction (2) ; et
chacune des nervures convexes extérieures (21) s'étend de la partie supérieure de la tête d'extraction (2) vers un bord de la surface en forme d'arc, et une partie évidée (23) est disposée entre une extrémité, proche de la tige d'insertion (22), de chacune des nervures convexes extérieures (21) et la tige d'insertion (22).

10. Centrifugeuse manuelle selon la revendication 1, **caractérisée en ce que** la vis d'entraînement (5) comprend :
un corps de vis (51), une paroi extérieure du corps de vis (51) étant pourvue d'une section de filetage extérieure formée par plusieurs rainures de filetage (511) ;
un insert de filetage de bobine (53), partiellement serré de manière rotative dans les rainures de filetage (511) sur la section de filetage extérieure, **caractérisée en ce que**, une largeur de rainure de chacune des rainures de filetage (511) correspond à une largeur de l'insert de filetage de bobine (53), et une profondeur de chacune des rainures de filetage (511) est inférieure à une épaisseur de l'insert de filetage de bobine (53), de sorte que l'insert de filetage de bobine (53) est exposé à l'extérieur des rainures de filetage (511) afin de former un filetage d'entraînement (S).

11. Centrifugeuse manuelle selon la revendication 10,
**caractérisée en ce que**, l'insert de filetage de bobine (53) comprend une section de compression (531) située à une partie de queue de l'insert de filetage de bobine (53), la section de compression (531) s'étend vers une extrémité de queue d'insert (5311) de l'insert de filetage de bobine (53), la section de compression (531) est disposée de manière rotative sur le corps de vis (51) à l'extérieur des rainures de filetage (511), et la section de compression (531) est capable d'être comprimée dans une direction axiale du corps de vis (51) sous la condition d'une contrainte, de sorte que l'extrémité de queue d'insert (5311) de l'insert de filetage de bobine (53) est comprimée vers la spire précédente adjacente de l'insert de filetage de bobine (53).

12. Centrifugeuse manuelle selon la revendication 11, **caractérisée en ce que**, la largeur d'une bobine de la dernière spire (d1) de l'insert de filetage de bobine (53) est inférieure à une largeur d'une bobine de la spire précédente (d) de l'insert de filetage de bobine (53), et la largeur d'une bobine de la dernière spire de l'insert de filetage de bobine (53) diminue progressivement vers une largeur de la partie d'extrémité de queue.

13. Centrifugeuse manuelle selon la revendication 11,
**caractérisée en ce que**, une face d'extrémité extérieure (M) de l'extrémité de queue de l'insert de filetage de bobine (53) est une surface inclinée vers la spire précédente adjacente de l'insert de filetage de bobine (53) ;
un angle environnant de la section de compression (531) sur le corps de vis (51) est compris entre 180 degrés et 360 degrés ; et
le corps de vis (51) est axialement pourvu d'une feuille de blocage métallique (54) destinée à empêcher l'extrémité de queue de l'insert de filetage de bobine (53) de se visser dans une direction circonférentielle.

14. Centrifugeuse manuelle selon la revendication 11, **caractérisée en ce que**, le corps de vis (51) correspondant à la section de compression (531) à l'extrémité de queue de l'insert de filetage de bobine (53) est axialement pourvu d'une rainure d'insertion (512), la feuille de blocage métallique (54) comprend une partie d'insertion et une partie saillante, la partie d'insertion est insérée dans la rainure d'insertion (512), l'extrémité de queue de l'insert de filetage de bobine (53) est capable de venir en butée contre un côté de la partie saillante, et la partie saillante est capable d'empêcher l'extrémité de queue de l'insert de filetage de bobine (53) de se visser dans la direction circonférentielle.

15. Centrifugeuse manuelle selon la revendication 14, **caractérisée en ce que** la vis d'entraînement (5) comprend en outre :
un corps de tige poli (52), **caractérisée en ce que**, une extrémité du corps de tige poli (52) comprend une extrémité de butée (521) reliée au corps de vis (51), et l'extrémité de butée (521) vient en butée contre l'autre côté de la partie saillante ;
un mandrin métallique (55), disposé dans le corps de vis (51) et le corps de tige poli (52), **caractérisée en ce que** le mandrin métallique (55), le corps de vis (51) et le corps de tige poli (52) forment intégralement la vis d'entraînement (5) par moulage par injection ; et
un joint de limitation, disposé au niveau d'une extrémité du corps de vis (51) et limitant et retenant une extrémité de tête de l'insert de filetage de bobine (53).
